(19) Europäisches Patentamt / European Patent Office / Office européen des brevets

(11) **EP 4 091 732 B1**

(12) **EUROPÄISCHE PATENTSCHRIFT**

(45) Veröffentlichungstag und Bekanntmachung des Hinweises auf die Patenterteilung:
**02.04.2025   Patentblatt 2025/14**

(21) Anmeldenummer: **22174495.6**

(22) Anmeldetag: **20.05.2022**

(51) Internationale Patentklassifikation (IPC):
**B21B 38/02** *(2006.01)*        **B21B 38/06** *(2006.01)*
**B21B 38/00** *(2006.01)*

(52) Gemeinsame Patentklassifikation (CPC):
**B21B 38/00;** B21B 38/02; B21B 38/06;
B21B 2273/04

(54) **MESSROLLE ZUM FESTSTELLEN EINER EIGENSCHAFT EINES ÜBER DIE MESSROLLE GEFÜHRTEN BANDFÖRMIGEN GUTS, VERWENDUNG EINER MESSROLLE ZUM FESTSTELLEN EINER EIGENSCHAFT EINES ÜBER DIE MESSROLLE GEFÜHRTEN BANDFÖRMIGEN GUTS SOWIE VERFAHREN ZUR BESTIMMUNG DER LAGE EINER BANDKANTE EINES BANDFÖRMIGEN GUTS**

MEASURING ROLLER FOR DETECTING A PROPERTY OF A STRIP-SHAPED MATERIAL GUIDED OVER THE MEASURING ROLLER, USE OF A MEASURING ROLLER FOR DETECTING A PROPERTY OF A STRIP MATERIAL GUIDED OVER THE MEASURING ROLLER AND METHOD FOR DETERMINING THE POSITION OF A STRIP EDGE OF A STRIP-SHAPED MATERIAL

ROULEAU DE MESURE PERMETTANT DE DÉTERMINER UNE PROPRIÉTÉ D'UNE MARCHANDISE EN FORME DE BANDE GUIDÉE SUR LE ROULEAU DE MESURE, UTILISATION D'UN ROULEAU DE MESURE POUR DÉTERMINER UNE PROPRIÉTÉ D'UNE MARCHANDISE EN FORME DE BANDE GUIDÉE SUR LE ROULEAU DE MESURE, AINSI QUE PROCÉDÉ DE DÉTERMINATION DE LA POSITION D'UN BORD DE BANDE D'UNE MARCHANDISE EN FORME DE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2021   DE 102021002661**

(43) Veröffentlichungstag der Anmeldung:
**23.11.2022   Patentblatt 2022/47**

(73) Patentinhaber: **VDEh-Betriebsforschungsinstitut GmbH**
**40237 Düsseldorf (DE)**

(72) Erfinder:
• **KREMEYER, Julian**
  **40723 Hilden (DE)**
• **MÜCKE, Gert**
  **40724 Hilden (DE)**
• **Neuer, Marcus**
  **40625 Düsseldorf (DE)**
• **KRAMBEER, Hagen**
  **41363 Jüchen (DE)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
**EP-A2- 1 369 186          DE-A1- 102006 029 139**
**DE-B3- 102008 030 282     JP-A- S6 083 714**
**KR-A- 20080 058 917**

**Beschreibung**

Die Erfindung betrifft die bestimmte Verwendung einer Messrolle zum Feststellen einer Eigenschaft eines über die Messrolle geführten bandförmigen Guts, insbesondere von Metallband. Ferner betrifft die Erfindung ein Verfahren zur Bestimmung der Lage einer Bandkante eines bandförmigen Guts relativ zu einem Bezugspunkt, einer Bezugslinie oder einer Bezugsebene. Ebenso betrifft die Erfindung eine Messrolle zum Feststellen einer Eigenschaft eines über die Messrolle geführten bandförmigen Guts, insbesondere von Metallband.

Messrollen werden beim Kalt- und Warmwalzen von Metallband eingesetzt und sind beispielsweise aus der DE 42 36 657 A1 bekannt.

Für das herkömmliche Messen der Planheit beim Walzen von Bändern werden im Wesentlichen Verfahren eingesetzt, bei denen das Band mit einem gewissen Umschlingungswinkel über eine mit Kraftsensoren bestückte Messrolle geführt wird.

Auf diese Weise kommt es bei der in der DE 42 36 657 A1 beschriebenen Messrolle zu einer Berührung zwischen Kraftmessgebern oder deren Abdeckungen, die in zur Messrollenoberfläche offenen radialen Ausnehmungen der Messrolle angeordnet sind, und dem Band. Zwischen den am Boden ihrer Ausnehmung aufgespannten Kraftsensoren und der sie umgebenden Ausnehmungswandung befindet sich ein zylindrischer Spalt.

Dieser Spalt kann mit einem O-Ring schulterdichtend oder mit einer Kunststoffschicht frontdichtend verschlossen sein, um das Eindringen von Schmutz, beispielsweise Bandabrieb und Schmiermittel, in die Ringspalte zwischen Kraftsensor und Messrollenkorpus zu verhindern. Auch ist es möglich, wie in der DE 42 36 657 A1 in der Fig. 1c dargestellt ist, den Messgeber in eine Ausnehmung der Vollrolle zu platzieren, die dann mit einer angearbeiteten Membran abgedeckt wird. Die in DE 42 36 657 A1 gezeigte Abdeckung weist eine runde Außenoberfläche auf, deren geometrische Form mithin sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist.

Die Anordnung der Kraftsensoren mit Abstand von der sie umgebenden Wandung und das Verschließen des Ringspalts mit Hilfe eines O-Rings oder eines hinreichend elastischen Kunststoffs (DE 196 16 980 A1) verhindert, dass sich während des Walzens im Korpus der Messrolle wirksame Querkräfte störend auf die Kraftsensoren bzw. das Messergebnis auswirken. Derartige Störkräfte sind die Folge des auf die Messrolle wirkenden Bandzugs und einer damit verbundenen Durchbiegung der Messrolle. Deren Querschnitt nimmt dabei die Form einer Ellipse an, deren längere Achse parallel zum Band verläuft. Die Messrollendurchbiegung täuscht dem Kraftsensor eine Unebenheit des Bandes vor, wenn sie durch Kraftnebenschluss auf den Messgeber übertragen wird. Ein solcher Kraftnebenschluss lässt sich bei der Verwendung einer Dichtung im Ringspalt nicht ganz vermeiden, da die Dichtkräfte zwangsläufig auf den Kraftsensor wirken. Die in DE 196 16 980 A1 gezeigte Abdeckung weist eine runde Außenoberfläche auf, deren geometrische Form mithin sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist.

Aus DE 102 07 501 C1 ist eine Vollrolle zum Feststellen von Planheitsabweichungen beim Behandeln von bandförmigem Gut, insbesondere von Metallband, mit in Ausnehmungen angeordneten Kraftsensoren bekannt, bei der die Kraftsensoren axial zugänglich sind. Das Einbringen der axial verlaufenden Ausnehmungen wird häufig mit Tieflochbohrwerkzeugen durchgeführt. Bei Messrollen mit Ballenbreiten >1000 mm müssen sehr lange Bohrwerkzeuge verwendet werden, da für das stirnseitige Bohren der Ausnehmung das Bohrwerkzeug erst über die zum Teil sehr langen Zapfen gefahren werden muss.

Aus DE 20 2007 001 066 U1 ist eine Messrolle zum Feststellen von Planheitsabweichungen beim Behandeln von bandförmigem Gut, insbesondere von Metallband, mit einem Messrollenkörper und einem den Messrollenkörper zumindest teilweise umgebenden Mantelrohr und in Ausnehmungen angeordneten Kraftsensoren bekannt, wobei sich die Ausnehmungen von einer Stirnseite der Messrolle in den Messrollenkörper und/oder in das Mantelrohr hinein erstreckt. Die Ausnehmung kann stirnseitig mit einem Deckel verschlossen werden. Die jeweils stirnseitig vorgesehenen Zapfen dieser Messrolle sind an dem Messrollenkörper ausgeformt. Nachteilig an dieser Messrolle ist die Schwächung des Messrollenkörpers bzw. des Mantelrohrs durch die eingebrachten Ausnehmungen. Bei breiten Messrollen ist auch wie beim Tieflochbohren hierbei das Überfahren des Lagerzapfens von großem Nachteil. Ein weiteres Problem ist das Verschließen der bis zur Stirnseite eingearbeiteten Kanäle/Nuten, da diese nicht wie bei der DE 102 07 501 C1 mit Bohrwerkzeugen (runde Kanäle), sondern mit Fräswerkzeugen (eckige Kanäle) hergestellt werden.

Die Messrollen des Standes der Technik ermitteln die Planheit des Bandes anhand von über den Umfang der Messrolle verteilten Einzelsensoren. Dabei werden die Messergebnisse der Einzelsensoren zur Ermittlung der Planheit bei der Auswertung häufig in Bezug zueinander gesetzt. Bei den Messrollen des Standes der Technik treten immer dann Messfehler auf, wenn das Metallband schwingt. Das ist beispielsweise der Fall, wenn die Messrolle in der Nähe eines Haspels angeordnet ist. Die Schwingung führt dazu, dass der Betrag der auf den einzelnen Kraftsensor wirkenden Kraft nicht mehr allein vom Bandzug und der Planheit des Bandes abhängt, sondern durch die Schwingung verstärkt oder gemindert wird. Dies führt gerade bei Auswertemethoden, die die Messergebnisse von über den Umfang verteilten Einzelsensoren ins Verhältnis zueinander setzen, zu Messfehlern.

Die Verwendung einer Messrolle zum Ermitteln der Lage des bandformigen Guts oder zum Ermitteln der Lage einer Kante des bandförmigen Guts auf der Umfangsfläche der Messrolle ist für eine bestimmte Messrolle aus WO 2020/120328 A bekannt. Die in Fig. 7 der WO 2020/120328 gezeigten Abdeckungen weisen jeweils eine runde Außenoberfläche auf, deren geometrische Form mithin sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist. Der in Fig. 20 der WO 2020/120328 gezeigte Kraftsensor weist eine kreisringförmige Außenoberfläche auf, deren geometrische Form mithin sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist. Der in Fig. 23 der WO 2020/120328 gezeigte Kraftsensor weist eine quadratische Außenoberfläche auf, deren geometrische Form mithin sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist.

Aus EP 3 009 206 A1 ist eine Messrolle, die zum Feststellen der Planheit eines Metallbands geeignet ist, bekannt, die

- einen Messrollenkörper mit einer Umfangsfläche,
- mindestens eine Ausnehmung in dem Messrollenkörper,
- mindestens einen in der Ausnehmung angeordneten Balken, der sich entlang einer Längsachse erstreckt, und
- einen ersten in der Ausnehmung angeordneten Kraftsensor und einen zweiten in der Ausnehmung angeordneten Kraftsensor

aufweist, wobei der Balken innerhalb der Ausnehmung auf dem ersten Kraftsensor und dem zweiten Kraftsensor abgestützt ist und wobei sich der Messrollenkörper entlang einer Rotationsachse erstreckt und die Längsachse des Balken nicht parallel zur Rotationsachse des Messrollenkörpers verläuft, aber in einer Ebene verläuft, die senkrecht zur Rotationsachse des Messrollenkörpers steht. Der in EP 3 009 206 A1 gezeigte Messbalken weist eine rechteckige Außenoberfläche auf, deren geometrische Form sowohl bzgl. einer Ebene, die senkrecht zur Rotationsachse steht, spiegelsymmetrisch ausgeführt ist, als auch bzgl. einer Ebene, die die Rotationsachse enthalten, spiegelsymmetrisch ausgeführt ist.

DE 10 2008 030282 B3 betrifft eine Messrolle und ein Verfahren zur Ermittlung von Planheitsfehlern eines Bandes und/oder zur Ermittlung des Bandzuges eines Metallbandes mit zumindest einem in den Rollenmantel bzw. in die Rollenoberfläche integrierten Messbalken, welcher auf Sensoren abgestützt ist.

Vor diesem Hintergrund lag der Erfindung das Problem zu Grunde, bessere Möglichkeiten zur Bestimmung der Lage einer Bandkante eines bandförmigen Guts relativ zu einem Bezugspunkt oder einer Bezugslinie oder einer Bezugsebene zu schaffen. Diese Aufgabe wird durch die Gegenstände der Ansprüche 1, 2 und 6 gelöst. Vorteilhafte Ausführungsformen sind in den Unteransprüchen und der nachfolgenden Beschreibung näher erläutert.

Die Erfindung geht von dem Grundgedanken aus, die aus DE 10 2008 030282 B3 bekannte Messrolle derart weiterzuentwickeln, dass die Messrolle

- einen Messrollenkörper mit einer Umfangsfläche,
- mindestens eine Ausnehmung in dem Messrollenkörper,
- mindestens einen in der Ausnehmung angeordneten Balken, der sich entlang einer Längsachse erstreckt, und
- einen in der Ausnehmung angeordneten Kraftsensor

aufweist, wobei der Balken innerhalb der Ausnehmung auf dem Kraftsensor abgestützt ist und wobei sich der Messrollenkörper entlang einer Rotationsachse erstreckt und die Längsachse des Balken nicht parallel zur Rotationsachse des Messrollenkörpers verläuft und die Längsachse des Balken nicht in einer Ebene verläuft, die senkrecht zur Rotationsachse des Messrollenkörpers steht, um die dann so umkonstruierte Messrolle zur Bestimmung der Lage einer Bandkante des bandförmigen Guts relativ zu einem Bezugspunkt oder einer Bezugslinie oder einer Bezugsebene zu verwenden, wenn das bandförmige Gut über die Messrolle geführt wird bzw. mit dieser Messrolle ein Verfahren zur Bestimmung der Lage der Bandkante durchzuführen.

Dadurch, dass die Längsachse des Balkens

- nicht parallel zur Rotationsachse des Messrollenkörpers verläuft und
- nicht in einer Ebene verläuft, die senkrecht zur Rotationsachse des Messrollenkörpers steht,

verläuft die Längsachse des Balkens schräg zur Rotationsachse und schräg zu den Ebenen, die senkrecht zur Rotationsachse des Messrollenkörpers stehen. Bei einem derart schräg angeordneten Balken ist es möglich, aus dem Verlauf der von dem Kraftsensor gemessenen Kraft über die Zeit festzustellen, mit welchem Punkt auf dem Balken das bandförmige Gut (nachfolgend auch als Band bezeichnet) das erste Mal Kontakt hat, wenn das bandförmige Gut über die Messrolle geführt wird und sich die Messrolle dreht. Aus der bekannten Geometrie des Balkens und beispielsweise der bekannten Lage des Balkens relativ zum Rand der Messrolle (zu einem Ende des Messrollenkörpers), kann beispielsweise berechnet werden, wie weit der Punkt auf dem Balken, mit dem das bandförmige Gut das erste Mal Kontakt hat, wenn das bandförmige Gut über die Messrolle geführt wird, von dem Rand (von einem Ende des Messrollenkörpers) der Messrolle entfernt ist. Daraus ergibt sich die Lage der Bandkante relativ zum Rand der Messrolle (zu einem Ende des Messrollenkörpers), da das bandförmige Gut zuerst mit der Bandkante auf den Balken aufläuft.

Als "Längsachse" des Balkens wird die Achse in die Hauptrichtung verstanden, in die sich der Balken erstreckt. Bei einem rechteckigen Balken, der parallel zueinander verlaufende Längskanten und senkrecht zu den Längskanten verlaufende Seitenkanten, die kürzer als die Längskanten sind, aufweist, ist die Längsachse die Achse, die in der Mitte des Balken und parallel zu den Längskanten des Rechtecks verläuft. Bei einem Balken, der eine ebene, rechteckförmige Unterseite aufweist, die parallel zueinander verlaufende Längskanten und senkrecht zu den Längskanten verlaufende Seitenkanten, die kürzer als die Längskanten sind, aufweist, und der eine gebogene Oberseite aufweist, die dazu geeignet ist, in Flucht mit einer zylinderförmigen Außenoberfläche des Messrollenkörpers zu sein, und die bei einer Anordnung des Balkens in der Ausnehmung die durch die Ausnehmung erzeugte Lücke in der zylinderförmigen Außenoberfläche des Messrollenkörpers so zu schließen vermag, dass sich eine (bis auf einen etwaigen Spalt um den Balken herum) geschlossene, zylinderförmige Außenoberfläche ergibt, ist die Längsachse die Achse, die in der Mitte des Balkens und parallel zu den Längskanten der rechteckförmigen Unterseite verläuft. Bei einem Balken, der eine nicht ebene Unterseite und eine gebogene Oberseite aufweist, die dazu geeignet ist, in Flucht mit einer zylinderförmigen Außenoberfläche des Messrollenkörpers zu sein, und die bei einer Anordnung des Balkens in der Ausnehmung die durch die Ausnehmung erzeugte Lücke in der zylinderförmigen Außenoberfläche des Messrollenkörpers so zu schließen vermag, dass sich eine (bis auf einen etwaigen Spalt um den Balken herum) geschlossene, zylinderförmige Außenoberfläche ergibt, und bei dem zwei Stirnflächen vorgesehen sind, wobei sich die Unterseite und die Oberseite von der einen Stirnfläche zur anderen Stirnfläche erstrecken, ist die Längsachse die Linie, die einen Punkt auf der einen Stirnfläche, vorzugsweise den Mittelpunkt der einen Stirnfläche mit einem Punkt auf der anderen Stirnfläche, vorzugsweise den Mittelpunkt der anderen Stirnfläche verbindet. Die Stirnflächen können ebene Flächen sein. Die Stirnflächen können auch gekrümmte Flächen sein, beispielsweise Teilflächen eines Zylinders, wenn der Balken nicht durch ebene Stirnflächen, sondern durch gerundete Endflächen begrenzt wird.

In einer bevorzugten Ausführungsform wird das bandförmige Gut derart über die Messrolle geführt und die Messrolle derart durch das über sie geführte bandförmige Gut und/oder einen Antrieb gedreht, dass in Rotationsrichtung der Messrolle gesehen das weiter außen liegende Ende des Balkens (das Ende des Balkens, das näher zum Rand der Messrolle liegt) führt. In einer bevorzugten Ausführungsform kommen weiter außenliegende Bereiche des Balkens zuerst in Kontakt mit dem bandförmigen Gut, bevor weiter innenliegende Bereiche des Balkens in Kontakt mit dem bandförmigen Gut kommen.

In einer bevorzugten Ausführungsform ist die Ausnehmung eine Ausnehmung, die sich von der Umfangsfläche des Messrollenkörpers nach innen erstreckt bzw. von einer gekrümmten Fläche, vorzugsweise einer zylinderförmigen Fläche, die parallel zur Umfangsfläche des Messrollenkörpers verläuft, nach innen erstreckt. Es sind Ausführungsformen möglich, bei denen die Ausnehmung mit einer Öffnung in der Umfangsfläche des Messrollenkörpers endet, wobei diese Öffnung vorzugsweise durch den Balken oder durch eine radial oberhalb des Balkens angeordnete Abdeckung verschlossen ist. Ebenso sind Ausführungsformen möglich, bei denen die Ausnehmung im Endzustand der Messrolle durch eine radial außerhalb der Ausnehmung angeordnete Materialschicht verschlossen wird. Eine solche Materialschicht kann durch einen Schichtauftrag erzeugt werden, der auf die Umfangsfläche eines Messrollenkörper-Halbzeugs aufgebracht wird, um den finalen Messrollenkörper zu erzeugen. Ebenso sind Bauformen bekannt, bei denen ein Mantelrohr auf ein Messrollenkörper-Halbzeug aufgeschoben wird und dadurch Ausnehmungen, die in dem Messrollenkörper-Halbzeug vorhanden sind und mit einer Öffnung in der Umfangfläche des Messrollenkörper-Halbzeugs enden, verschlossen werden. Die Wandstärke des Mantelrohrs bestimmt dann die radial außerhalb der Ausnehmung vorhandene Materialschicht. Ebenso sind Bauformen denkbar, bei denen Ausnehmungen, die in dem Messrollenkörper-Halbzeug vorhanden sind und mit einer Öffnung in der Umfangfläche des Messrollenkörper-Halbzeugs enden, wobei die Ausnehmung durch eine Abdeckung verschlossen ist, durch eine Beschichtung, die auf die Umfangsfläche des Messrollenkörper-Halbzeugs aufgebracht wird, verschlossen werden. Die Materialstärke der Beschichtung definiert dann die radial außerhalb der Ausnehmung vorhandene Materialschicht.

In einer bevorzugten Ausführungsform hat die Mehrzahl, vorzugsweise die überwiegende Mehrzahl (mehr als 75%) der Querschnittsflächen der Ausnehmung in Ebenen senkrecht zu einer Radialrichtung der Messrolle die gleiche Form und/oder die gleiche Größe.

In einer bevorzugten Ausführungsform hat die Mehrzahl, vorzugsweise die überwiegende Mehrzahl (mehr als 75%) der Querschnittsflächen der Ausnehmung in den Ebenen, die

- senkrecht zu einer Radialrichtung der Messrolle verlaufen und
- den Balken schneiden,

die gleiche Form wie der Balken. In einer bevorzugten Ausführungsform haben alle Querschnittsflächen der Ausnehmung in den Ebenen, die

• senkrecht zu einer Radialrichtung der Messrolle verlaufen und
• den Balken schneiden,

die gleiche Form wie der Balken. In einer bevorzugten Ausführungsform hat die Ausnehmung die gleiche Form aber eine etwas größere Form (beispielsweise eine um 1% oder um 2% größere Querschnittsfläche in der jeweiligen Ebene), so dass sich ein gleichmäßiger Spalt zwischen dem Balken und der die Ausnehmung begrenzenden Begrenzungswand bildet. Der Spalt kann gänzlich oder gar nicht oder in Teilen mit einer Dichtung gefüllt sein.

In eine bevorzugten Ausführungsform hat der Balken eine Unterseite, die näher zur Rotationsachse des Messrollenkörpers angeordnet ist, und eine Oberseite, die relativ zur Unterseite in eine Radialrichtung der Messrolle weiter außerhalb angeordnet ist.

In einer bevorzugten Ausführungsform stützt sich der Balken innerhalb der Ausnehmung auf einem ersten Kraftsensor und auf einem zweiten Kraftsensor ab, wobei der erste Kraftsensor in der Ausnehmung angeordnet ist und der zweite Kraftsensor in der Ausnehmung angeordnet ist. Im Kontext des erfindungsgemäßen Verfahrens wird aus dem Messsignal des ersten Kraftsensors und/oder dem Messsignal des zweiten Kraftsensors die Lage der Bandkante des bandförmigen Guts relativ zu einem Bezugspunkt oder einer Bezugslinie oder einer Bezugsebene des Messrollenkörpers der Messrolle bestimmt.

In einer bevorzugten Ausführungsform stützt sich der Balken innerhalb der Ausnehmung mit seiner Unterseite auf dem ersten Kraftsensor und dem zweiten Kraftsensor ab. Die Unterseite kann eben ausgeführt sein. Die Unterseite kann zwei Absätze aufweisen, wobei sich der Balken mit den Absätzen der Unterseite auf dem ersten Kraftsensor und dem zweiten Kraftsensor abstützt.

In einer bevorzugten Ausführungsform weist der Balken ein erstes Ende und ein zweites, dem ersten Ende gegenüberliegendes Ende auf. In einer bevorzugten Ausführungsform stützt sich der Balken mit dem ersten Ende auf dem ersten Kraftsensor und mit dem zweiten Ende auf dem zweiten Kraftsensor ab.

In einer bevorzugten Ausführungsform liegt die Oberseite des Balkens in der gekrümmten Fläche, vorzugsweise in der zylinderförmigen Fläche, in der auch die Umfangsfläche des Messrollenkörpers liegt. In einer bevorzugten Ausführungsform liegt die Oberseite des Balkens in einer gekrümmten Fläche, vorzugsweise in einer zylinderförmigen Fläche, die parallel zu der gekrümmten Fläche, vorzugsweise der zylinderförmigen Fläche angeordnet ist, in der die Umfangsfläche des Messrollenkörpers liegt. Die Oberseite kann aber auch eben ausgeführt sein.

In einer bevorzugten Ausführungsform haben die Oberseite und die Unterseite des Balkens die gleiche Querschnittsform. In einer bevorzugten Ausführungsform haben die Oberseite und die Unterseite des Balkens die gleiche Querschnittsform und die gleiche Größe. In einer bevorzugten Ausführungsform haben die Oberseite und die Unterseite des Balkens die gleiche Querschnittsform und die gleiche Größe und fluchten miteinander. Es sind auch Ausführungsformen möglich, bei denen die Unterseite die gleiche Querschnittsform hat, wie die Oberseite, aber eine kleinere Größe.

In einer bevorzugten Ausführungsform hat die Messrolle eine Mittenebene, die senkrecht zur Rotationsachse des Messrollenkörpers verläuft und in der Mitte zwischen dem einen Ende des Messrollenkörpers und dem zweiten, dem ersten Ende gegenüberliegenden Ende angeordnet ist.

Die Vorteile der Erfindung lassen sich bereits erzielen, wenn die Messrolle einen einzigen Balken aufweist. In einer bevorzugten Ausführungsform weist der einzige Balken ein erstes Ende auf, das auf einer Seite der Mittenebene angeordnet ist, und ein zweites, dem ersten Ende gegenüberliegendes Ende auf, das auf der gegenüberliegenden Seite der Mittenebene angeordnet ist. Der einzige Balken kreuzt in dieser bevorzugten Ausführungsform also über die Mittenebene. In einer bevorzugten Ausführungsform ist das erste Ende des Balkens näher an dem ersten Ende des Messrollenkörpers angeordnet als an der Mittenebene. Ergänzend oder alternativ ist in einer bevorzugten Ausführungsform das zweite Ende des Balkens näher an dem zweiten Ende des Messrollenkörpers angeordnet als an der Mittenebene. Bereits mit einer solchen Ausführungsform lässt sich die Lage beider Kanten des Bandes ermitteln. Aus dem Verlauf der von dem Kraftsensor gemessenen Kraft über die Zeit lässt sich ermitteln,

• wann das Band das erste Mal auf den Balken aufläuft, woraus sich die Lage der ersten Bandkante berechnen lässt, und
• wann das Band wieder von dem Balken abläuft, woraus sich die Lage der zweiten Bandkante berechnen lässt.

Ist die Lage beider Bandkanten bekannt, kann zusätzlich auch noch die Bandbreite als Abstand zwischen den beiden Bandkanten ermittelt werden.

Die Vorteile der Erfindung lassen sich besonders gut erzielen, wenn die Messrolle einen ersten Balken und einen zweiten Balken aufweist. In einer bevorzugten Ausführungsform weist der erste Balken ein erstes Ende und ein zweites, dem ersten Ende gegenüberliegendes Ende auf, wobei das erste Ende und das zweite Ende des ersten Balkens auf einer Seite der Mittenebene angeordnet sind. In einer bevorzugten Ausführungsform weist der zweite Balken ein erstes Ende und ein zweites, dem ersten Ende gegenüberliegendes Ende auf, wobei das erste Ende und das zweite Ende des zweiten Balkens auf der gegenüberliegende Seite der Mittenebene angeordnet sind. Weder der erste Balken noch der zweite Balken kreuzen in einer bevorzugten Aufführungsform die Mittenebene. In einer bevorzugten Ausführungsform sind

- das erste Ende des ersten Balkens näher zum ersten Ende des Messrollenkörpers angeordnet als zur Mittenebene,
- das zweite Ende des ersten Balkens näher zur Mittenebene angeordnet als das erste Ende des ersten Balkens,
- das erste Ende des zweiten Balkens näher zum zweiten Ende des Messrollenkörpers angeordnet als zur Mittenebene,
- das zweite Ende des zweiten Balkens näher zur Mittenebene angeordnet als das erste Ende des zweiten Balkens,
- das erste Ende des ersten Balkens und das erste Ende des zweiten Balkens auf einer Linie angeordnet, die parallel zur Rotationsachse des Messrollenkörpers verläuft.

In einer bevorzugten Ausführungsform sind der erste Balken und der zweite Balken spiegelsymmetrisch zur Mittenebene ausgeführt.

Eine Ausführungsform mit einem ersten Balken auf einer Seite der Mittenebene und einem zweiten Balken auf der gegenüberliegenden Seite der Mittenebene lässt sich besonders gut dazu verwenden, die Lage der einen Bandkante mit dem ersten Balken und die Lage der zweiten Bandkante mit dem zweiten Balken zu bestimmen. Ist die Lage beider Bandkanten bekannt, kann zusätzlich auch noch die Bandbreite als Abstand zwischen den beiden Bandkanten ermittelt werden.

Es sind auch Ausführungsformen mit mehr als zwei Balken möglich. Vorzugsweise sind in diesen Ausführungsformen jeweils zwei Balken zu einem Paar aus einem ersten Balken und einem zweiten Balken zusammengefasst, wobei vorzugsweise der erste Balken und der zweite Balken des Paars spiegelsymmetrisch zur Mittenebene ausgeführt sind. In einer bevorzugten Ausführungsform ist ein erstes Paar in Umfangsrichtung beabstandet von einem zweiten Paar angeordnet. Durch Erhöhung der Anzahl der Paare kann die Auflösung erhöht werden. Je mehr Paare auf dem Messrollenkörper in Umfangsrichtung angeordnet sind, desto häufiger wird die Bandkantenlage pro Umdrehung der Messrolle ermittelt.

Die Vorteile der Erfindung können bereits mit einem einzigen Kraftsensor in der Ausnehmung realisiert werden, auf dem sich der Balken in der Ausnehmung abstützt. Untersuchungen haben gezeigt, dass eine Teilüberdeckung des Balkens, wie sie sich ergeben würde, wenn das Band so auf dem Balken zu liegen kommt, dass die Bandkante über den Balken führt, aus dem Signal des einzigen Kraftsensors ermittelt werden kann und auch der Grad der Teilüberdeckung ermittelt werden kann, so dass die Lage der Bandkante auf dem Balken und damit die Lage der Bandkante auf der Messrolle ermittelt werden kann.

Bei Ausführungsformen, bei denen nur ein einziger Kraftsensor in der Ausnehmung vorgesehen wird, auf dem sich der Balken in der Ausnehmung abstützt, ist es möglich, dass sich der Balken nur auf dem Kraftsensor abstützt und ansonsten nicht abgestützt ist. Bis auf die Abstützung auf dem Kraftsensor ist der Balken in dieser Ausführungsform mithin frei schwebend ausgeführt. In einer alternativen Ausführungsform stützt sich der Balken auf dem einzigen Kraftsensor ab und hat noch mindestens einen zweiten Auflagepunkt auf einem Absatz in der Ausnehmung. Vorzugsweise hat der Balken in dieser Ausführungsform nur zwei Abstützungen, nämlich einmal auf dem Kraftsensor und einmal auf einem einzigen Auflagepunkt auf einem Absatz in der Ausnehmung.

Es sind auch Ausführungsformen möglich, bei denen sich der Balken in der Ausnehmung auf mehr als zwei Kraftsensoren abstützt.

In einer bevorzugten Ausführungsform verläuft die Längsachse des Balkens in einer Ebene, die in einem Winkel von 10° bis 80°, vorzugsweise von 15° bis 75°, vorzugsweise von 15° bis 50°, vorzugsweise von 20° bis 45°, vorzugsweise 30° bis 60° zu einer Ebene steht, die die Rotationsachse enthält.

In einer bevorzugten Ausführungsform ist der Balken in einem Querschnitt in einer Ebene, die die Längsachse des Balkens enthält oder parallel zur Längsachse verläuft, rechteckförmig und nicht quadratisch ausgeführt. Es sind Ausführungsformen möglich, bei denen der Balken im Wesentlichen rechteckförmig ausgeführt ist, aber an seinem Ende mit Halbkreisen abgerundet ist. Dies erlaubt es für Ausführungsformen, bei denen die Ausnehmung die gleiche Querschnittsform wie der Balken hat, die Ausnehmung mit runden Enden und ohne rißgefährdete Ecken auszuführen.

In einer bevorzugten Ausführungsform hat der Balken in der Mehrzahl, vorzugsweise in der überwiegenden Mehrzahl der Ebenen, die

- senkrecht zu einer die Längsachse des Balkens schneidenden Radialrichtung der Messrolle verlaufen,

eine Querschnittsform, die

- spiegelsymmetrisch bezüglich einer Ebene ist, die die die Längsrichtung des Balkens schneidende Radialrichtung der Messrolle und die Längsrichtung des Balkens enthält, und/oder
- spiegelsymmetrisch bezüglich einer Ebene ist, die die die Längsrichtung des Balkens schneidende Radialrichtung der Messrolle enthält und senkrecht zur Längsrichtung des Balkens verläuft.

In einer bevorzugten Ausführungsform hat der Balken von seinem ersten Ende bis zu seinem zweiten Ende eine Länge, die mindestens 5%, vorzugsweise mindestens 10%, vorzugsweise mindestens 15%, vorzugsweise mindestens 20%, vorzugsweise mindestens 30% der längsten Länge des Messrollenkörpers entlang einer Linie parallel zur Rotationsachse des Messrollenkörpers entspricht.

Der Balken ist insbesondere bevorzugt mit einer Spannschraube in der Ausnehmung verschraubt. In einer bevorzugten Ausführungsform ist pro Kraftsensor in der Ausnehmung eine Spannschraube vorgesehen. In einer bevorzugten Ausführungsform ist der jeweilige Kraftsensor ringförmig ausgeführt und die Spannschraube führt durch die Mitte des Rings. Die Spannschraube sitzt mit ihrem Kopf vorzugsweise in einer Nut, insbesondere bevorzugt einer der Querschnittsform des Kopfs der Spannschraube entsprechenden Nut, beispielsweise einer kreisförmigen Nut oder einer sechskantförmigen Nut. Mit der Spannschraube kann eine Vorspannung auf den Kraftsensor erzeugt werden. Es sind ferner Ausführungsformen möglich, bei denen der Kraftsensor selbst ein Gewinde für die Spannschraube aufweist.

Mit der erfindungsgemäßen Verwendung und dem erfindungsgemäßen Verfahren wird die Lage der Bandkante des bandförmigen Guts relativ zu einem Bezugspunkt, einer Bezugslinie oder einer Bezugsebene bestimmt. In einer bevorzugten Ausführungsform wird mit der erfindungsgemäßen Verwendung und dem erfindungsgemäßen Verfahren die Lage der Bandkante des bandförmigen Guts relativ zu einem Bezugspunkt, einer Bezugslinie oder einer Bezugsebene der Messrolle bestimmt. Es sind aber auch Bauformen möglich, bei denen mit der erfindungsgemäßen Verwendung und dem erfindungsgemäßen Verfahren die Lage der Bandkante des bandförmigen Guts relativ zu einem Bezugspunkt, einer Bezugslinie oder einer Bezugsebene einer Anlage bestimmt wird, in der die Messrolle verbaut ist, beispielsweise die vertikale Mittelebene eines Walzgerüsts oder eines Haspels. Ein Bezugspunkt kann ein Punkt am Ende des Messrollenkörpers sein. Eine Bezugslinie kann eine einmal um den Messrollenkörper umlaufende Linie sein. Eine Bezugsebene kann die Ebene sein, in der ein Ende des Messrollenkörpers liegt. Eine Bezugsebene kann die Mittenebene sein.

Die erfindungsgemäß vorgeschlagene Verwendung der Messrolle zur Bestimmung der Bandkantenlage kann bereits mit einer Messrolle durchgeführt werden, die nur den, bzw. die Balken enthält. Es ist im Rahmen der Erfindung möglich, mit der Messrolle nur die Bandkantenlage zu bestimmen. Es ist im Rahmen der Erfindung jedoch auch möglich, mit der gleichen Messrolle sowohl die Lage der Bandkante, als auch die Bandbreite (die sich aus dem Abstand der einen Bandkante zur anderen Bandkante ergibt) als auch andere Eigenschaften des bandförmigen Guts, wie beispielsweise die Planheit des bandförmigen Guts oder den Bandzug, zu messen. In einer bevorzugten Ausführungsform wird im Rahmen der erfindungsgemäß vorgeschlagenen Verwendung eine Messrolle verwendet, die neben dem erfindungsgemäß vorgesehenen Balken bzw. neben den erfindungsgemäß vorgesehenen Balken weitere Ausnehmungen mit weiteren Kraftsensoren aufweist. Die Kraftsensoren der weiteren Ausnehmungen werden beispielsweise zum Bestimmen der Planheit und/oder zum Bestimmen des Bandzugs verwendet. Für die erfindungsgemäße Verwendung können bestehende Messrollen, die für die Bestimmung der Planheit und/oder die Bestimmung des Bandzugs ausgestattet sind, nachgerüstet werden, indem der erfindungsgemäß vorgesehene Balken und die für ihn vorgesehene Ausnehmung bzw. die erfindungsgemäß vorgesehenen Balken und die für sie vorgesehenen Ausnehmungen zusätzlich in die bestehende Messrolle eingebracht werden.

Die Erfindung schlägt deshalb auch eine Messrolle, die zum Feststellen einer Eigenschaft eines über die Messrolle geführten bandförmigen Guts, insbesondere von Metallband geeignet ist, vor, die

- einen Messrollenkörper mit einer Umfangsfläche,
- mindestens eine Ausnehmung in dem Messrollenkörper, wobei die Ausnehmung eine erste Querschnittsform hat,
- mindestens einen in der Ausnehmung angeordneten Balken, der sich entlang einer Längsachse erstreckt, und
- einen ersten in der Ausnehmung angeordneten Kraftsensor

aufweist, wobei der Balken innerhalb der Ausnehmung auf dem ersten Kraftsensor abgestützt ist und wobei sich der Messrollenkörper entlang einer Rotationsachse erstreckt und die Längsachse des Balkens nicht parallel zur Rotationsachse des Messrollenkörpers verläuft und die Längsachse des Balken nicht in einer Ebene verläuft, die senkrecht zur Rotationsachse des Messrollenkörpers steht, wobei mindestens eine weitere Ausnehmung in dem Messrollenkörper vorgesehen ist, wobei in der weiteren Ausnehmung ein zweiter Kraftsensor angeordnet ist und die weitere Ausnehmung eine zweite Querschnittsform hat, die von der ersten Querschnittsform unterschiedlich ist.

Erfindungsgemäß ist die Querschnittsform der weiteren Ausnehmung kreisförmig.

In einer bevorzugten Ausführungsform ist die weitere Ausnehmung eine axial und damit parallel zur Rotationsachse verlaufende Bohrung, wie beispielsweise eine der in DE 102 07 501 C1 offenbarten Ausnehmungen. Es können auch mehrere weitere Ausnehmungen mit Kraftsensoren vorgesehen sein.

In einer bevorzugten Ausführungsform ist die weitere Ausnehmung eine radial verlaufende Bohrung, die beispielsweise wie eine der aus DE 42 36 657 A1 bekannten Ausnehmung ausgeführt ist. Es können auch mehrere weitere Ausnehmungen mit Kraftsensoren vorgesehen sein.

Erfindungsgemäß wird ferner eine Messrolle zum Feststellen einer Eigenschaft eines über die Messrolle geführten bandförmigen Guts, insbesondere von Metallband, vorgeschlagen, die

- einen Messrollenkörper mit einer Umfangsfläche,
- mindestens eine Ausnehmung in dem Messrollenkörper,
- einen in der Ausnehmung angeordneten Kraftsensor und
- eine Abdeckung aufweist, die die Ausnehmung zumindest teilweise verschließt und die in Radialrichtung des Messrollenkörpers gesehen oberhalb des Kraftsensors angeordnet ist,

wobei der Messrollenkörper eine Rotationsachse aufweist,

wobei der Messrollenkörper eine Rotationsachse aufweist,

wobei

- die Abdeckung eine Außenoberfläche und/oder der Kraftsensor eine Außenoberfläche und/oder ein zwischen der Abdeckung und dem Kraftsensor angeordnetes Zwischenstück eine Außenoberfläche aufweist, deren geometrische Form bzgl. einer Symmetrieebene, die die Rotationsachse enthält, spiegelsymmetrisch ausgeführt ist, deren geometrische Form aber bzgl. Ebenen, die senkrecht zur Rotationsachse stehen, nicht spiegelsymmetrisch ausgeführt ist
  oder
- die Abdeckung eine Außenoberfläche und/oder der Kraftsensor eine Außenoberfläche und/oder ein zwischen der Abdeckung und dem Kraftsensor angeordnetes Zwischenstück eine Außenoberfläche aufweist, deren geometrische Form bzgl. einer Symmetrieebene, die senkrecht zur Rotationsachse verläuft, spiegelsymmetrisch ausgeführt ist, deren geometrische Form aber bzgl. Ebenen, die die Rotationsachse enthalten, nicht spiegelsymmetrisch ausgeführt ist
  oder
- die Abdeckung eine Außenoberfläche und/oder der Kraftsensor eine Außenoberfläche und/oder ein zwischen der Abdeckung und dem Kraftsensor angeordnetes Zwischenstück eine Außenoberfläche aufweist, deren geometrische Form sowohl bzgl. Ebenen, die senkrecht zur Rotationsachse stehen, nicht spiegelsymmetrisch ausgeführt ist, als auch bzgl. Ebenen, die die Rotationsachse enthalten, nicht spiegelsymmetrisch ausgeführt ist.

Die Abdeckung, das Zwischenstück und/oder der Kraftsensor können beispielsweise eine Außenoberfläche aufweisen, die dreieckig oder vieleckig, aber mit ungerader Zahl der Ecken, beispielsweise fünfeckig oder siebeneckig, ist oder die beispielsweise die Form eines Trapez oder die Form eines Parallelogramms hat.

In einer bevorzugten Ausführungsform ist kein Zwischenstück zwischen der Abdeckung und dem Kraftsensor vorgesehen, so dass die Erfindung dadurch realisiert wird, dass

- die Abdeckung eine Außenoberfläche und/oder der Kraftsensor eine Außenoberfläche aufweist, deren geometrische Form bzgl. einer Symmetrieebene, die die Rotationsachse enthält, spiegelsymmetrisch ausgeführt ist, deren geometrische Form aber bzgl. Ebenen, die senkrecht zur Rotationsachse stehen, nicht spiegelsymmetrisch ausgeführt ist
  oder
- die Abdeckung eine Außenoberfläche und/oder der Kraftsensor eine Außenoberfläche aufweist, deren geometrische Form bzgl. einer Symmetrieebene, die senkrecht zur Rotationsachse verläuft, spiegelsymmetrisch ausgeführt ist, deren geometrische Form aber bzgl. Ebenen, die die Rotationsachse enthalten, nicht spiegelsymmetrisch ausgeführt ist
  oder
- die Abdeckung eine Außenoberfläche und/oder der Kraftsensor eine Außenoberfläche aufweist, deren geometrische Form sowohl bzgl. Ebenen, die senkrecht zur Rotationsachse stehen, nicht spiegelsymmetrisch ausgeführt ist, als auch bzgl. Ebenen, die die Rotationsachse enthalten, nicht spiegelsymmetrisch ausgeführt ist.

In einer bevorzugten Ausführungsform erstreckt sich die Abdeckung entlang einer Längsachse, wobei in einer besonders bevorzugten Ausführungsform die Außenoberfläche nicht spiegelsymmetrisch zu einer Ebene verläuft, die die Längsachse enthält.

In einer bevorzugten Ausführungsform erstreckt sich der Kraftsensor entlang einer Längsachse, wobei in einer besonders bevorzugten Ausführungsform die Außenoberfläche nicht spiegelsymmetrisch zu einer Ebene verläuft, die die Längsachse enthält.

In einer bevorzugten Ausführungsform erstreckt sich ein zwischen einer Abdeckung und dem Kraftsensor angeordnetes Zwischenstück entlang einer Längsachse, wobei in einer besonders bevorzugten Ausführungsform die Außenoberfläche nicht spiegelsymmetrisch zu einer Ebene verläuft, die die Längsachse enthält.

In einer bevorzugten Ausführungsform ist eine Spannschraube vorgesehen, deren Kopf in einer Nut der Abdeckung angeordnet ist und die mit dem Grund der Ausnehmung verschraubt ist. Insbesondere bevorzugt ist der Kraftsensor ringförmig ausgeführt und die Spannschraube führt durch den Kraftsensor.

Es wurde erkannt, dass durch die erfindungsgemäß vorgeschlagene Formgebung der Außenoberfläche der Abdeckung und/oder des Kraftsensors und/oder - soweit vorhanden - des Zwischenstücks der Effekt erreicht werden kann, dass sich

- der zeitliche Verlauf des Messsignals des Kraftsensors in einer Betriebssituation, in der die Abdeckung nur zu einem ersten Teil von dem bandförmigen Gut überdeckt wird,
  deutlich von
- dem zeitliche Verlauf des Messsignals des Kraftsensors in einer Betriebssituation, in der die Abdeckung nur zu einem zweiten, von dem ersten Teil unterschiedlichen Teil von dem bandförmigen Gut überdeckt wird,

- 

unterscheidet, so dass aus einer Betrachtung des zeitlichen Verlaufs ermittelt werden kann, wie sehr das bandförmige Gut die Abdeckung überdeckt.

In einer bevorzugten Ausführungsform weist der Messrollenkörper einen Ausschnitt auf, in dem sich ein Formkörper befindet. In einer bevorzugten Ausführungsform grenzt der Ausschnitt an die Ausnehmung. In einer besonders bevorzugten Ausführungsform weist der Ausschnitt eine Grundfläche, vorzugsweise eine ebene Grundfläche, auf. In einer besonders bevorzugten Ausführungsform mündet die Ausnehmung in der Grundfläche des Ausschnitts. In einer bevorzugten Ausführungsform mündet die Ausnehmung beabstandet vom Rand der Grundfläche in die Grundfläche, vorzugsweise mittig in der Grundfläche des Ausschnitts. In einer bevorzugten Ausführungsform erstreckt sich die Ausnehmung beginnend an der Grundfläche der Ausnehmung weiter in den Messrollenkörper hinein, vorzugsweise radial weiter in den Messrollenkörper hinein.

In einer bevorzugten Ausführungsform ist der Formkörper in dem Ausschnitt befestigt, vorzugsweise verschraubt und/oder verklebt.

In einer bevorzugen Ausführungsform, bei der die Ausnehmung in die Grundfläche des Ausschnitts mündet, ist die die Ausnehmung zumindest teilweise verschließende Abdeckung in der Ausnehmung angeordnet und weist eine Außenoberfläche auf, die mit der Grundfläche des Ausschnitts fluchtet. In einer alternativen Ausführungsform, bei der die Ausnehmung in die Grundfläche des Ausschnitts mündet, weist die die Ausnehmung zumindest teilweise verschließende Abdeckung eine Außenoberfläche auf, die in Radialrichtung der Messrolle gesehen weiter außerhalb als die Grundfläche des Ausschnitts ausgeführt ist. Bei einer solchen Ausführungsform kann die Abdeckung gänzlich oberhalb und außerhalb der Ausnehmung angeordnet sein oder kann von der Ausnehmung in den Ausschnitt hinein ragen. Bei einer solchen Ausführungsform kann die Außenoberfläche der Abdeckung fluchtend mit der Umfangsfläche des Messrollenkörpers und/oder fluchtend mit einer Außenoberfläche eines in dem Ausschnitt angeordneten Formkörpers ausgeführt sein. Es ist auch eine Ausführungsform möglich, bei der der Messrollenkörper ein Messrollenkörper-Halbzeug und eine auf das Messrollenkörper-Halbzeug aufgebrachte Ummantelung aufweist und die Außenoberfläche der Abdeckung fluchtend mit der Umfangsfläche des Messrollenkörper-Halbzeugs und/oder fluchtend mit einer Außenoberfläche eines in dem Ausschnitt angeordneten Formkörpers ausgeführt ist.

Eine zumindest teilweise oberhalb der Ausnehmung im Ausschnitt angeordnete Abdeckung kann in den Teilen, die oberhalb der Ausnehmung und in dem Ausschnitt angeordnet sind, in ihrer Abmessung senkrecht zu einer durch die Abdeckung führenden, vorzugsweise mittig durch die Abdeckung führenden Radialen des Messrollenkörpers kleiner sein als die in die gleichen Richtungen weisenden Abmessungen der Öffnung der Ausnehmung, mit der die Ausnehmung in die Grundfläche des Ausschnitt mündet. In einer alternativen Ausführungsform kragt der Teil der Abdeckung, der außerhalb der Ausnehmung, aber innerhalb des Ausschnitts angeordnet ist, zumindest in eine Richtung, vorzugsweise in zwei gegenüberliegende Richtungen, vorzugsweise in mehr als zwei Richtungen über die Öffnung der Ausnehmung, mit der die Ausnehmung in die Grundfläche des Ausschnitts mündet, über. In einer bevorzugten Ausführungsform ist bei einer Abdeckung, die ausschließlich im Ausschnitt angeordnet ist, die Abdeckung nicht rund ausgeführt. In einer bevorzugten Ausführungsform, bei der die Abdeckung teilweise in der Ausnehmung und teilweise im Ausschnitt angeordnet ist, ist vorzugsweise der Teil der Abdeckung, der im Ausschnitt angeordnet ist, nicht rund ausgeführt.

In einer bevorzugten Ausführungsform sind zwei Formkörper in dem Ausschnitt angeordnet. In einer bevorzugten Ausführungsform füllen die vorhandenen Formkörper den Ausschnitt bzw. füllen bei einer vorhandenen, in den Raum des Ausschnitts ragenden Abdeckung, den Raum des Ausschnitts, der noch verbleibt. In einer bevorzugten Ausführungsform weist der jeweilige Formkörper eine Außenoberfläche auf, die mit der Umfangsfläche des Messrollenkörpers bzw. einer Umfangsfläche eines Messrollenkörper-Halbzeugs fluchtet, beispielsweise die Umfangfläche zu einer geschlossen Zylinderoberfläche ergänzt.

In einer bevorzugten Ausführungsform mündet die Ausnehmung in die Grundfläche des Ausschnitts und ist ein einziger Formkörper in dem Ausschnitt angeordnet, wobei der Formkörper einen in dem Formkörper ausgeführten Stempel aufweist, der oberhalb der Abdeckung angeordnet ist, vorzugsweise in Kontakt mit der Abdeckung steht. In einer bevorzugten Ausführungsform ist der Stempel durch einen Freischnitt, vorzugsweise einen ringförmigen Freischnitt in dem Formkörper ausgeführt.

In einer bevorzugten Ausführungsform ist die Abdeckung einstückig mit dem Formkörper ausgeführt. Der Formkörper kann einen in dem Formkörper ausgeführten Stempel aufweisen, der von oberhalb der Ausnehmung in die Ausnehmung ragt und in Kontakt mit dem in der Ausnehmung befindlichen Kraftsensor steht. In einer bevorzugten Ausführungsform sind Teile des Stempels durch einen Freischnitt innerhalb des Formkörpers freigestellt, vorzugsweise mittels eines ringförmigen Freischnitts.

In einer bevorzugten Ausführungsform überlappt der Formkörper mit einer Ausnehmung, die in einer Grundfläche des Ausschnitts mündet. In einer bevorzugten Ausführungsform überlappt der Formkörper nur geringfügig mit der Ausnehmung. In einer bevorzugten Ausführungsform entspricht die Fläche des Formkörpers, mit der der Formkörper über die Ausnehmung überlappt, weniger als 30%, insbesondere bevorzugt weniger als 20%, insbesondere weniger als 10% der Fläche, mit der die Ausnehmung in die Grundfläche des Ausschnitts mündet (der Fläche der Öffnung der Ausnehmung in der Grundfläche).

In einer bevorzugten Ausführungsform ist der Formkörper und/oder die Abdeckung als Schichtauftrag ausgeführt, vorzugsweise als eigenständiges Bauteil, das als Schichtauftrag, beispielsweise im Wege des 3D-Drucks hergestellt ist, ausgeführt.

Erfindungsgemäß verschließt die Abdeckung die Ausnehmung zumindest teilweise. In einer bevorzugten Ausführungsform verschließt die Abdeckung die Ausnehmung dadurch zumindest teilweise, dass die Abdeckung zumindest teilweise, vorzugsweise gänzlich in der Ausnehmung angeordnet ist. Die Abdeckung ist vorzugweise mit einem umlaufenden Spalt in der Ausnehmung angeordnet. Vorzugsweise entspricht die Form der Ausnehmung der Abdeckung.

Vorzugsweise ist die Ausnehmung zumindest im Bereich ihrer am radial äußeren Ende der Ausnehmung vorgesehenen Öffnung derart ausgeführt, dass

- die Öffnung eine geometrische Form aufweist, die bzgl. einer Symmetrieebene, die die Rotationsachse enthält, spiegelsymmetrisch ausgeführt ist, deren geometrische Form aber bzgl. Ebenen, die senkrecht zur Rotationsachse stehen, nicht spiegelsymmetrisch ausgeführt ist
  oder
- die Öffnung eine geometrische Form aufweist, die bzgl. einer Symmetrieebene, die senkrecht zur Rotationsachse verläuft, spiegelsymmetrisch ausgeführt ist, deren geometrische Form aber bzgl. Ebenen, die die Rotationsachse enthalten, nicht spiegelsymmetrisch ausgeführt ist
  oder
- die Öffnung eine geometrische Form aufweist, die sowohl bzgl. Ebenen, die senkrecht zur Rotationsachse stehen, nicht spiegelsymmetrisch ausgeführt ist, als auch bzgl. Ebenen, die die Rotationsachse enthalten, nicht spiegelsymmetrisch ausgeführt ist.

Als ein "zumindest teilweises Verschließen der Ausnehmung" und unter der Formulierung, dass die Abdeckung "die Ausnehmung zumindest teilweise verschließt", wird aber jede Ausführungsform verstanden, bei der die Abdeckung in eine Blickrichtung entlang einer Radialen des Messrollenkörpers zumindest teilweise mit der Ausnehmung, insbesondere mit der am radial äußeren Ende der Ausnehmung vorgesehenen Öffnung, überlappt. Dies wird bei Abdeckungen erreicht, die in der Ausnehmung angeordnet sind. Dies wird aber auch bei Abdeckungen erreicht, die außerhalb der Ausnehmung und oberhalb der Ausnehmung angeordnet sind, beispielsweise in einem Ausschnitt des Messrollenkörpers angeordnet sind, und derart geformt und positioniert sind, dass die so geformte und positionierte Abdeckung in eine Blickrichtung entlang einer Radialen des Messrollenkörpers zumindest teilweise mit der Ausnehmung, insbesondere mit der am radial äußeren Ende der Ausnehmung vorgesehenen Öffnung, überlappt.

Die Abdeckung kann der vorstehend beschriebene, in der Ausnehmung angeordnete, sich entlang einer Längsachse erstreckende Balken sein. Es sind aber auch Ausführungsformen möglich, bei denen die Abdeckung außerhalb der Ausnehmung angeordnet ist. In einer bevorzugten Ausführungsform ist in diesen Ausführungsformen ein Zwischenstück vorgesehen, das zwischen der Abdeckung und dem Kraftsensor angeordnet ist. Vorzugsweise ist das Zwischenstück zumindest in einer Betriebssituation mit einem Ende in Kontakt mit der Abdeckung und mit einem gegenüberliegenden Ende in Kontakt mit dem Kraftsensor. Das Zwischenstück kann auf die Abdeckung ausgeübte Druckkräfte auf den Kraftsensor übertragen.

Die Form, insbesondere die Querschnittsform des Zwischenstücks, kann auf die Form, insbesondere die Querschnittsform der Abdeckung angepasst sein und asymmetrische Formen, insbesondere eine asymmetrische Querschnittsform der Abdeckung aufgreifen. Dabei sind auch Ausführungsformen möglich, bei denen die Form, insbesondere die Querschnittsform des Zwischenstücks von einer Form, insbesondere der Querschnittsform des Kraftsensors abweicht. Beispielsweise kann die Abdeckung eine asymmetrische Querschnittsform und das Zwischenstück und der Kraftsensor eine symmetrische Querschnittsform aufweisen.

Die Form, insbesondere die Querschnittsform des Zwischenstücks, kann auch auf die Form, insbesondere die Querschnittsform des Kraftsensors angepasst sein und asymmetrische Formen, insbesondere eine asymmetrische Querschnittsform des Kraftsensors aufgreifen. Dabei sind auch Ausführungsformen möglich, bei denen die Form, insbesondere die Querschnittsform des Zwischenstücks von einer Form, insbesondere der Querschnittsform der Abdeckung abweicht. Beispielsweise können das Zwischenstück und der Kraftsensor eine asymmetrische Querschnittsform und die Abdeckung eine symmetrische Querschnittsform aufweisen.

Schließlich sind auch Ausführungsformen möglich, bei denen das Zwischenstück eine Form, insbesondere eine Querschnittsform hat, die unterschiedlich von der Querschnittsform der Abdeckung und unterschiedlich von der Querschnittsform des Kraftsensors ist. Beispielsweise kann das Zwischenstück eine asymmetrische Querschnittsform und die Abdeckung und der Kraftsensor eine symmetrische Querschnittsform aufweisen.

Die vorstehenden genannte Querschnittform zu den vorstehend genannten Ausführungsformen bezieht sich insbesondere auf die jeweilige Querschnittform in einer Ebene senkrecht zu einer Radialen des Messrollenkörpers.

In einer bevorzugten Ausführungsform ist das Zwischenstück ein eigenständiges Element. Es sind jedoch auch Ausführungsformen denkbar, bei denen das Zwischenstück Teil des Körpers ist, der die Abdeckung bildet. Beispielsweise ist eine Ausführungsform möglich, bei der ein Körper einen oberen Teil hat, dessen Querschnittsform kreisförmig ist und der als Abdeckung fungiert, wobei der Körper einen unteren Teil aufweist, der ein Zwischenstück bildet, dessen Querschnittsform so asymmetrisch ausgebildet ist. In einer bevorzugten Ausführungsform ist ein Körper vorgesehen, der einen oberen Teil hat, der als Abdeckung fungiert, wobei der Körper einen unteren Teil aufweist, der ein Zwischenstück bildet, dessen Querschnittsform so asymmetrisch ausgebildet ist, dass

- eine zum Kraftsensor weisende Außenoberfläche des Zwischenstücks vorgesehen ist, deren geometrische Form bzgl. einer Symmetrieebene, die die Rotationsachse enthält, spiegelsymmetrisch ausgeführt ist, deren geometrische Form aber bzgl. Ebenen, die senkrecht zur Rotationsachse stehen, nicht spiegelsymmetrisch ausgeführt ist oder
- eine zum Kraftsensor weisende Außenoberfläche des Zwischenstücks vorgesehen ist, deren geometrische Form bzgl. einer Symmetrieebene, die senkrecht zur Rotationsachse verläuft, spiegelsymmetrisch ausgeführt ist, deren geometrische Form aber bzgl. Ebenen, die die Rotationsachse enthalten, nicht spiegelsymmetrisch ausgeführt ist oder
- eine zum Kraftsensor weisende Außenoberfläche des Zwischenstücks vorgesehen ist, deren geometrische Form sowohl bzgl. Ebenen, die senkrecht zur Rotationsachse stehen, nicht spiegelsymmetrisch ausgeführt ist, als auch bzgl. Ebenen, die die Rotationsachse enthalten, nicht spiegelsymmetrisch ausgeführt ist.

Ein "Schichtauftrag" im Sinne der Beschreibung umfasst einen Materialauftrag, mittels dem eine Schicht, insbesondere aus Metall, zunächst punktweise, linienweise bzw. spaltenweise und/oder rasterweise aufgetragen werden kann, um ein dreidimensionales Objekt in Form einer Schicht bzw. mehrerer Schichten übereinander auszubilden. Beim Schichtauftrag kann die Schicht, die momentan aufgetragen wird, mit einer darunterliegenden Schicht oder dem Messrollenkörper, sofern die Schicht die erste ist, die auf den Messrollenkörper aufgetragen wird, fest verbunden werden. Der Materialauftrag kann schichtweise computergesteuert aus einem oder mehreren flüssigen oder festen Werkstoffen nach vorgegebenen Maßen und Formen erfolgen. Beim Materialauftrag können physikalische oder chemische Härtungs- oder Schmelzprozesse stattfinden. Mittels des Schichtauftrags kann eine geschlossene im Wesentlichen glatte Oberfläche erzeugt werden. Der Schichtauftrag kann aus einer einzigen Schicht bestehen. Eine einzige Schicht kann dadurch erzeugt werden, dass sie einmal punktweise, linienweise bzw. spaltenweise und/oder rasterweise aufgetragen wird. Bei einem solchen Aufbau wird auf einer einmal erzeugten ersten Schicht keine weitere Schicht punktweise, linienweise bzw. spaltenweise und/oder rasterweise aufgetragen. In einer bevorzugten Ausführungsform besteht der Schichtaufbau jedoch aus mehreren Schichten, die vorzugsweise nacheinander hergestellt wurden. Unter "punktweise" wird das Aufbringen einer Schicht bzw. eines Teils einer Schicht mit einem Arbeitsgang verstanden, der keine Relativbewegungen entlang der Umfangsfläche des Messrollenkörpers beinhaltet. Der Begriff "punktweise" ist nicht als eine Beschränkung der Größe der Schicht, bzw. des Teils der Schicht, die, bzw. der mit diesem Arbeitsgang aufgebracht wird, zu verstehen. "Punktweise" kann auch das Auftragen einer großflächigen Schicht bzw. eines großflächigen Teils einer Schicht bedeuten, solange dieser Arbeitsschritt ohne Relativbewegungen entlang der Umfangsfläche des Messrollenkörpers möglich ist. In einer bevorzugten Ausführungsform ist der Schichtauftrag mittels eines Druckens durch einen 3D-Drucker, ein Laserstrahlschmelzen (LBM), ein Elektronenstrahlschmelzen (EBM), ein Laser-Pulverauftragsschweißen, ein Lichtbogenschweißen mit Drahtvorschub, ein thermisches Spritzen, ein Auftragsschweißen, ein Drahtlaserauftragsschweißen, ein Pulverbettverfahren, insbesondere bevorzugt das sog. "Selectiv Laser Sintering" (SLS) oder das sog. "Selective Laser Melting" (SLM), das Laser Metal Deposition (LMD), das Extremhochgeschwindigkeitslaserauftragsschweißen (EHLA) und/oder ein Auftraglöten gebildet. Hierdurch ist ein Schichtauftrag mittels einer additiven Fertigung auf Basis von 3D-Modellen möglich. Sofern Beispiele für die Fertigung des Schichtauftrags genannt werden, so umfasst diese additive Fertigung auf Basis von 3D-Modellen einen Freistrahl-Bindemittelauftrag, einen Materialauftrag mit gerichteter Energieeinbringung, eine Materialextrusion, einen Freistrahl-Materialauftrag, ein pulverbettbasiertes Schmelzen, eine Schichtlaminierung, eine badbasierte Fotopolymerisation und Kombinationen der vorgenannten Verfahren. Die Ausnehmung allein oder die Ausnehmung mit der Abdeckung bzw. dem Balken und dem Kraftsensor kann damit zumindest teilweise verschlossen, vorzugsweise ganz verschlossen werden. Die genannten Verfahren bieten den Vorteil, dass eine Materialzuführung für den Schichtauftrag mit Hilfe von Linearachsen oder einem Roboter über den Messrollenkörper bewegt werden kann. Hierbei kann ein Materialmix oder im Wesentlichen ein reines Material verwendet werden. Die Erzeugung einer Schmelze ist möglich. Insbesondere kann mittels des Laser- oder Elektronenstrahls eine Schmelze des zugeführten Materials erzeugt werden, die auf dem Messrollenkörper bzw. auf über dem Messrollenkörper schon vorliegenden Schichten aufgetragen werden. Es kann vorgesehen sein, dass das Material zum Schichtauftrag als Pulver mit einem Schutzgasstrom oder mittels Drahtvorschub in den Bereich gefördert wird, in dem eine Materialschmelze erzeugt wird.

Insbesondere kann mittels der genannten Verfahren ein Fügeprinzip durchgeführt werden, welches insbesondere ein Schmelzschweißen ist. Ein Stoffschluss ist hierdurch möglich.

In einer bevorzugten Ausführungsform weist der Schichtauftrag mindestens ein schweißgeeignetes Metall, mindestens eine schweißgeeignete Legierung und/oder keramische Verstärkungspartikel auf. Durch eine geeignete Wahl des Materials für den Schichtauftrag kann den Anforderungen an die Messrolle entsprochen werden und/oder eine gute thermische Stabilität bei gleichzeitig guten Herstellungsmöglichkeiten berücksichtigt werden. Insbesondere bevorzugt sind Metalle mit hoher Festigkeit und Zähigkeit. Insbesondere bevorzugt sind Eisen, Kobalt, Nickel, Chrom, Molybdän, Vanadium und deren Legierungen, beispielsweise eine Chrom-Molybdän-Legierung (CrMo), beispielsweise 42CrMo4, oder eine Chrom-Molybdän-Vanadium-Legierung (CrMoVa), beispielsweise 86CrMoV7 oder beispielsweise eine Wolfram-Nickel-Chrom-Legierung (WCNiCr).

In einer bevorzugten Ausführungsform weist der Schichtauftrag Schichten unterschiedlicher Zusammensetzung übereinander auf, so dass unterschiedliche Anforderungen an die Schichten hinsichtlich ihrer Lage am Messrollenkörper berücksichtigt werden können. Beispielsweise können die Schicht oder die mehreren Schichten direkt über der Ausnehmung mit dem gleichen Werkstoff ausgebildet sein, der insbesondere der gleiche oder ein ähnlicher Werkstoff wie der Werkstoff für den Messrollenkörper sein kann. Eine Schicht oder mehrere Schichten über der Schicht des Schichtauftrags, die unmittelbar über der Ausnehmung angeordnet sind, können mittels eines hochver-schleißarmen Werkstoffs ausgebildet sein. Insbesondere bevorzugt sind Siliciumcarbid, Wolframcarbid, Titancarbid, Tantalcarbid und/oder Chromcarbid.

In einer bevorzugten Ausführungsform ist der Messrollenkörper als Schichtaufbau ausgeführt.

Die erfindungsgemäße Messrolle weist einen Messrollenkörper auf. Vorzugsweise weist der Messrollenkörper eine geschlossene Umfangsfläche auf. In einer bevorzugten Ausführungsform ist der Messrollenkörper eine Vollrolle, die sich entlang einer Längsachse erstreckt. Unter einer Vollrolle wird ein Messrollenkörper verstanden, der einstückig ist und dessen Form entweder mit einem Urformverfahren, beispielsweise Gießen, hergestellt wurde und/oder dessen geometrische Form durch Trennverfahren, insbesondere durch Zerspanen, insbesondere durch Drehen, Bohren, Fräsen oder Schleifen aus einem einstückigen Halbzeug hergestellt wird. In einer bevorzugten Ausführungsform sind bei einem solchen als Vollrolle ausgebildeten Messrollenkörper auch die jeweils stirnseitig der Messrolle angeordneten Messrollenzapfen zur drehbaren Lagerung der Messrolle, beispielsweise in Kugellagern, Teil des einstückigen Körpers.

Es sind jedoch auch Bauformen, wie sie beispielsweise in Fig. 2 der DE 20 2014 006 820 U1 dargestellt werden, denkbar, bei denen der Hauptteil des Messrollenkörpers als zylinderförmige Vollrolle ausgeführt wird, die stirnseits angeordnete Deckel aufweist, an denen die Messrollenzapfen ausgeführt sind. Ferner kann der erfindungsgemäße Messrollenkörper beispielsweise wie der in Fig. 3 der DE 20 2014 006 820 U1 ausgeführte Messrollenkörper ausgebildet sein, bei dem der Messrollenkörper mit angeformten Zapfen ausgebildet ist und über den Messrollenkörper ein Mantelrohr aufgeschoben wird. In einer besonders bevorzugten Ausführungsform weist die Messrolle jedoch kein Mantelrohr auf, sondern ist als Vollrolle ausgeführt. Es sind Ausführungsformen denkbar, bei denen der erfindungsgemäße Messrollenkörper aus einzelnen, nebeneinander angeordneten Scheiben gebildet wird, wie dies beispielsweise in DE 26 30 410 C2 gezeigt wird.

In dem Messrollenkörper der erfindungsgemäßen Messrolle ist mindestens eine Ausnehmung vorgesehen. Es hat sich gezeigt, dass die Vorzüge der Erfindung bereits mit einer einzigen Ausnehmung im Messrollenkörper erreicht werden können. So ist es bei der Planheitsmessung denkbar, eine Information über die Planheit des über die Messrolle geführten bandförmigen Guts einmal pro Umdrehung der Messrolle bereitzustellen.

In einer bevorzugten Ausführungsform weist der Messrollenkörper mehrere Ausnehmungen auf. In einer bevorzugten Ausführungsform sind die Ausnehmungen im gleichen radialen Abstand zur Längsachse des Messrollenkörpers ausgeführt. In einer bevorzugten Ausführungsform sind alle Ausnehmungen in Umfangsrichtung äquidistant zueinander verteilt angeordnet. Es sind aber auch Ausführungsformen denkbar, bei denen eine erste Gruppe von Ausnehmungen vorgesehen ist, die insbesondere bevorzugt im gleichen radialen Abstand zur Längsachse und in Umfangsrichtung äquidistant verteilt angeordnet sind, und bei dem zusätzlich zu dieser ersten Gruppe von Ausnehmungen zumindest eine weitere Ausnehmung vorgesehen ist, die entweder bezüglich ihres radialen Abstands zur Längsachse anders ausgeführt ist, als die Ausnehmungen der ersten Gruppe und/oder nicht den gleichen Abstand in Umfangsrichtung zu den übrigen Ausnehmungen aufweist, wie die übrigen Ausnehmungen zueinander aufweisen. So ist es beispielsweise denkbar, eine Messrolle hinsichtlich der Planheitsmessung so auszuführen, wie eine Messrolle des Standes der Technik, beispielsweise wie die aus DE 102 07 501 bekannte Vollrolle oder die aus DE 10 2014 012 426 A1 bekannten Messrollen, um dann aber für die erfindungsgemäße Ausstattung diese Messrollen des Standes der Technik mit einer weiteren, außerhalb des Rasters ausgeführten Ausnehmung zu versehen, mit der beispielsweise eine andere Messung durchgeführt wird.

In einer bevorzugten Ausführungsform weist die Messrolle Lagerzapfen auf. In einer bevorzugten Ausführungsform sind bei Ausführungsformen der Messrolle mit Stirnseiten die Lagerzapfen an den Stirnseiten ausgebildet.

In einer bevorzugten Ausführungsform ist der Messrollenkörper zylinderförmig ausgeführt.

In einer bevorzugten Ausführungsform weist der Kraftsensor eine Sensorfläche auf, wobei der Kraftsensor bei einer Änderung der Lage der Sensorfläche des Kraftsensors ein Sensorsignal erzeugen kann. Kraftsensoren werden als Kraftsensor bezeichnet, weil sie dazu eingesetzt werden, Kräfte, insbesondere bevorzugt Druckkräfte zu messen. Um die auf sie wirkende Kraft zu messen, sind die Kraftsensoren derart ausgeführt, dass sie eine Sensorfläche aufweisen und bei einer Änderung der Lage der Sensorfläche ein Sensorsignal erzeugen können. Die Kraftsensoren weisen meist ein ihnen zugehöriges Bezugssystem auf und reagieren auf Änderungen der Lage der Sensorfläche in diesem Bezugssystem. Häufig weisen Kraftsensoren ein Gehäuse auf. Das Bezugssystem ist dann häufig das Gehäuse. Der Kraftsensor kann bei einer solchen Ausführungsform beispielsweise feststellen, ob sich die Lage der Sensorfläche relativ zu dem Gehäuse geändert hat. Ist der Kraftsensor beispielsweise als piezoelektrischer Kraftsensor ausgeführt, so weist er einen Piezo-Quarz auf, der ein elektrisches Signal erzeugen kann, wenn die Lage einer seiner Oberflächen relativ zu einer Bezugsfläche, beispielsweise einer gegenüberliegenden Oberfläche des Piezo-Quarz geändert wird, der Piezo-Quarz beispielsweise zusammengedrückt wird. Bei einem als Dehnungsmessstreifen ausgeführten Kraftsensor wird durch eine Lageänderung der Oberfläche des Kraftsensors die Länge des Messdrahts bzw. des aus Messdrähten gebildeten Messgitters geändert, meist gestreckt, teilweise aber auch gestaucht. Bei einem als optischen Kraftsensor ausgestalteten Kraftsensor werden die optischen Eigenschaften des Kraftsensors, beispielsweise der Brechungsindex oder Reflektionseigenschaften durch die Lageänderung der Oberfläche geändert.

Die erfindungsgemäß einzusetzenden Kraftsensoren weisen eine Sensorfläche auf, deren Lageänderung der Kraftsensor zur Bestimmung einer auf ihn wirkenden Kraft beobachtet. Es sind Ausführungsformen denkbar, bei denen die Sensorfläche eine Oberfläche des Elements ist, dessen Eigenschaften zur Erzeugung des Sensorsignals geändert werden, beispielsweise eine Oberfläche des Piezo-Quarzes selbst. Häufig sind bei derartigen Kraftsensoren jedoch Zwischenstücke vorgesehen, an denen die Sensorfläche ausgebildet ist. Häufig sind derartige Zwischenstücke starre Blöcke, bei denen eine Veränderung der Lage der einen Oberfläche des starren Blocks aufgrund der Starrheit des Blocks unmittelbar zu einer Veränderung der Lage der gegenüberliegenden Fläche führt. Derartige Zwischenstücke können dazu eingesetzt werden, die Sensorfläche von übrigen Teilen des Kraftsensors, insbesondere von einem Gehäuse überstehend auszubilden. Durch eine gegenüber anderen Teilen des Kraftsensors überstehende Sensorfläche wird die Messgenauigkeit erhöht, weil eine klar definierte Fläche geschaffen wird, auf die die Umgebung einwirken kann. Durch überstehende Sensorflächen können beispielsweise Messfehler durch Kraftnebenschluss verhindert werden. Der erfindungsgemäße Kraftsensor kann beispielsweise wie der in DE 1 773 551 A1 gezeigte Kraftsensor ausgeführt sein und ein in einem Gehäuse angeordnetes, aus einer mehrschichtigen Kristallanordnung bestehendes Piezoelement aufweisen, das zwischen zwei Kraftübertragungsscheiben angeordnet ist. Bei einer solchen Ausführungsform wäre die Sensorfläche die Außenoberfläche der in Fig. 1 der DE 1 773 551 A1 oberen Kraftübertragungsscheibe oder die Außenoberfläche der in Fig. 1 der DE 1 773 551 A1 unteren Kraftübertragungsscheibe.

In einer bevorzugten Ausführungsform ist die Sensorfläche eben ausgeführt. In einer bevorzugten Ausführungsform weist die Flächennormale der ebenen Sensorfläche des Kraftsensors in Richtung auf die Umfangsfläche.

In einer bevorzugten Ausführungsform steht die Flächennormale einer eben ausgeführten Sensorfläche an dem Punkt der Sensorfläche, an dem die Sensorfläche von einer Radialen des Messrollenkörpers geschnitten wird, in einem Winkel zu dieser Radialen des Messrollenkörpers, der kleiner ist als 45°, insbesondere bevorzugt kleiner als 20°, insbesondere bevorzugt kleiner als 10°, insbesondere bevorzugt kleiner als 5° ist.

In einer bevorzugten Ausführungsform ist die Sensorfläche eines in der erfindungsgemäßen Messrolle eingesetzten Kraftsensors eine ebene Fläche.

In einer bevorzugten Ausführungsform ist die Sensorfläche eine von übrigen Elementen des Kraftsensors hervorgehobene Fläche, die in Kontakt mit einer die Ausnehmung zur Umfangsfläche hin verschließenden Abdeckung steht.

In einer bevorzugten Ausführungsform sind zumindest zwei in der erfindungsgemäßen Messrolle eingesetzten Kraftsensoren, insbesondere bevorzugt die Mehrzahl der in der erfindungsgemäßen Messrolle eingesetzten Kraftsensoren, insbesondere bevorzugt alle in der erfindungsgemäßen Messrolle eingesetzten Kraftsensoren gleichartig ausgeführt, mithin vom gleichen Typ und insbesondere von der gleichen Baureihe, insbesondere bevorzugt identisch aufgebaut.

In einer bevorzugten Ausführungsform weist die Messrolle eine Vielzahl von Kraftsensoren auf, die alle in einer Ausnehmung angeordnet sind. Insbesondere bevorzugt sind mehr als 5, besonders bevorzugt mehr als 7, besonders bevorzugt mehr als 10, besonders bevorzugt mehr als 15 Kraftsensoren in einer Ausnehmung angeordnet.

Die erfindungsgemäße Messrolle findet insbesondere bevorzugt Einsatz beim Feststellen von Eigenschaften eines Metallbands beim Kalt- oder Warmwalzen des Metallbands, insbesondere zum Feststellen der Planheit des Metallbands. Weitere Einsatzgebiete können Weiterverarbeitungslinien sein, wie z.B. Nachwalzgerüste (Dressiergerüste), Bandglühlinien, Verzinkungslinien, Streck-Biege-Richtanlagen.

Die Erfindung wird nachfolgend anhand von in der Zeichnung dargestellten Ausführungsbeispielen des näheren erläutert. In der Zeichnung zeigen:

Fig. 1 eine schematische Ansicht einer erfindungsgemäß für die Bestimmung der Bandkantenlage zu verwendenden Messrolle;

Fig. 2 eine schematische Darstellung der in eine Ebene abgewickelten Umfangsfläche des Messrollenkörpers der Messrolle und des über diese Umfangsfläche laufenden bandförmigen Guts;

Fig.3 eine schematische Schnittzeichnung durch einen Teil der Messrolle und einer in dem Messrollenkörper ausgeführten Ausnehmung mit in der Ausnehmung angeordneten Balken und erstem Kraftsensor und zweitem Kraftsensor;

Fig. 4 einen Ausschnitt aus der Darstellung gemäß Fig. 2;

Fig. 5 eine Draufsicht auf einen Teil der Umfangsfläche einer erfindungsgemäßen Messrolle;

Fig. 6 eine geschnittene Ansicht eines Teils der erfindungsgemäßen Messrolle entlang der Schnittlinie A-A in Fig. 5;

Fig. 7 eine geschnittene Ansicht eines Teils der erfindungsgemäßen Messrolle entlang der Schnittlinie B-B in Fig. 5;

Fig. 8 eine der Ansicht gemäß Fig. 6 vergleichbare geschnittene Ansicht eines Teils einer weiteren Ausführungsform einer erfindungsgemäßen Messrolle;

Fig. 9 eine schematische Draufsicht auf einen Kraftsensor einer Messrolle;

Fig. 10 eine schematische Draufsicht auf ein Zwischenstück und einen Kraftsensor einer Messrolle;

Fig. 11 eine schematische Draufsicht auf ein Zwischenstück und einen Kraftsensor einer Messrolle; und

Fig. 12 eine schematische Darstellung der auf eine Messrolle wirkenden Kräfte.

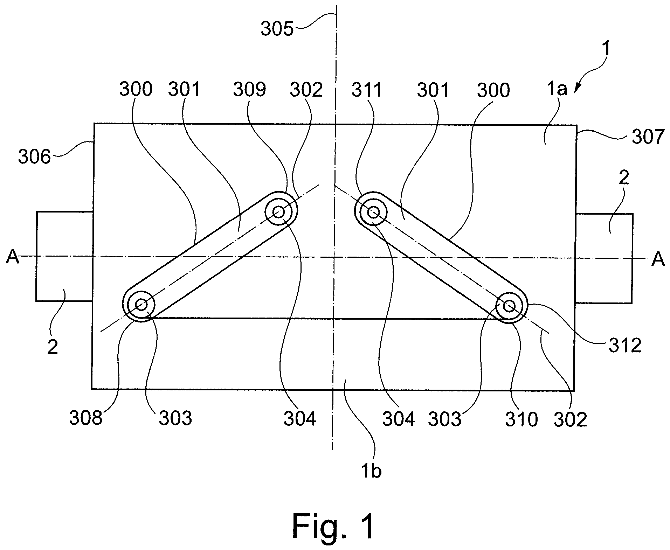

Die erfindungsgemäß für die Bandkantenlage zu verwendende Messrolle 1 hat gemäß Fig. 1 Zapfen 2 und weist einen als Vollrolle ausgeführten Messrollenkörper 1a auf. Der Messrollenkörper 1a hat eine Rotationsachse A, die zugleich die Längsachse A des Messrollenkörpers 1a ist.

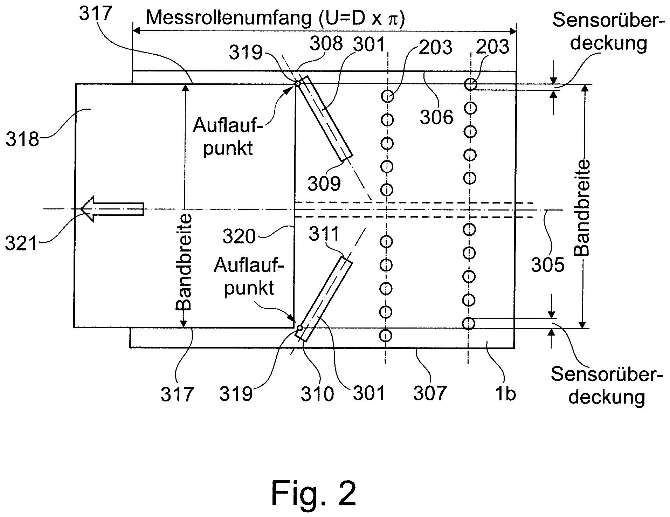

Der Messrollenkörper 1a ist als Zylinder ausgeführt und hat eine Umfangsfläche 1b. Die Umfangsfläche 1b des zylinderförmigen Messrollenkörpers 1a ist in Fig. 2 als abgewickelte Fläche dargestellt.

Die in Fig. 1 dargestellte Ausführungsform hat zwei Ausnehmungen 300. In beiden Ausnehmungen 300 ist jeweils ein Balken 301 angeordnet. Der jeweilige Balken 301 erstreckt sich entlang einer Längsachse 302. In der in Fig. 1 dargestellten Ausführungsform ist der jeweilige Balken 301 im wesentlichen rechteckförmig ausgeführt und weist an seinen Enden halbkreisförmige Enden auf, mithin sind die Stirnflächen dieses Balkens 301 gekrümmte Flächen, nämlich Teilflächen eines Zylinders. Bei der in Fig. 2 dargestellten Ausführungsform sind die Stirnflächen ebene Flächen.

In der in Fig. 1 dargestellten Ausführungsform sind in jeder Ausnehmung 300 ein erster Kraftsensor 303 und eine zweiter Kraftsensor 304 angeordnet. Der jeweilige Balken 301 stützt sich innerhalb der Ausnehmung auf dem ersten Kraftsensor 303 und dem zweiten Kraftsensor 304 ab. Die jeweilige Längsachse 302 des jeweiligen Balkens 301 verläuft nicht parallel zur Rotationsachse A des Messrollenkörpers 1a und verläuft nicht in einer Ebene, die senkrecht zur Rotationsachse A des Messrollenkörpers 1a steht. Die Balken 301 verlaufen schräg über den Messrollenkörper 1a.

In Fig. 1 ist die Mittenebene 305 des Messrollenkörpers 1a dargestellt. Die Mittenebene 305 verläuft senkrecht zur Rotationsachse A des Messrollenkörpers 1a und ist in der Mitte zwischen dem einen Ende 306 des Messrollenkörpers 1a und dem zweiten, dem ersten Ende 306 gegenüberliegenden Ende 307 angeordnet.

Der erste Balken 301 weist ein erstes Ende 308 und ein zweites, dem ersten Ende 308 gegenüberliegendes Ende 309 auf, wobei das erste Ende 308 und das zweite Ende 309 des ersten Balkens 301 auf einer Seite der Mittenebene 305 angeordnet sind. Der zweite Balken 301 weist ein erstes Ende 310 und ein zweites, dem ersten Ende 310 gegenüberliegendes Ende 311 auf, wobei das erste Ende 310 und das zweite Ende 311 des zweiten Balkens 301 auf der gegenüberliegende Seite der Mittenebene 305 angeordnet sind. Weder der erste Balken 301 noch der zweite Balken 301 kreuzen die Mittenebene. Der erste Balken 301 und der zweite Balken 301 sind so ausgeführt, dass

- das erste Ende 308 des ersten Balkens 301 näher zum ersten Ende 306 des Messrollenkörpers 1a angeordnet ist als zur Mittenebene 305,
- das zweite Ende 309 des ersten Balkens 301 näher zur Mittenebene 305 angeordnet ist als das ersten Ende 308 des Messrollenkörpers 1a,
- das erste Ende 310 des zweiten Balkens 301 näher zum zweiten Ende 307 des Messrollenkörpers 1a angeordnet als zur Mittenebene 305,
- das zweite Ende 311 des zweiten Balkens 301 näher zur Mittenebene 305 angeordnet ist als das erste Ende 310,
- das erste Ende 308 des ersten Balkens 301 und das erste Ende 310 des zweiten Balkens 310 auf einer Linie 312 angeordnet sind, die parallel zur Rotationsachse A des Messrollenkörpers 1a verläuft.

Der erste Balken 301 und der zweite Balken 301 sind spiegelsymmetrisch zur Mittenebene 305 ausgeführt.

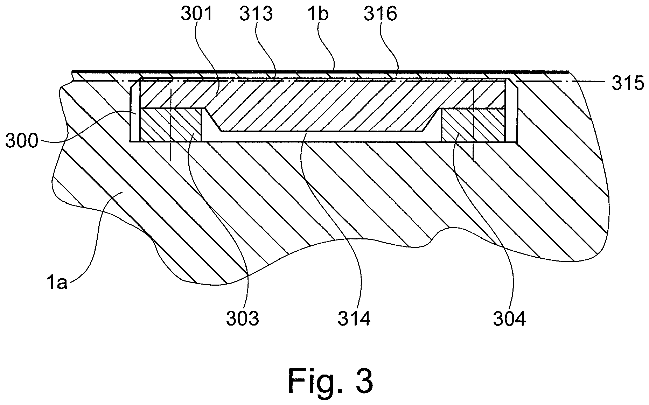

Fig. 3 zeigt, dass der Balken 301 eine Oberseite 313 und eine Unterseite 314 aufweist. Die Oberseite 313 ist radial weiter außen angeordnet, als die Unterseite 314. Die Oberseite ist in einer gekrümmten Fläche 315 angeordnet, die zylinderförmig ist und parallel zur zylinderförmigen Umfangsfläche 1b des Messrollenkörpers 1a verläuft.

Fig. 3 zeigt einen Schichtauftrag 316, der von oben auf die Oberseite 313 des Balkens 301 aufgebracht wurde. Durch den Schichtauftrag 316 wird die Ausnehmung 300 verschlossen und eine geschlossene Umfangsfläche 1b des Messrollenkörpers 1a erzeugt. Der Schichtauftrag 316 kann durch additive Fertigungsverfahren hergestellt werden. Der Schichtauftrag 316 kann durch Auftragsschweißen hergestellt werden. Der Schichtauftrag 316 kann im Zuge eines 3D-Drucks, insbesondere bevorzugt eines 3D-Drucks des gesamten Messrollenkörpers 1a hergestellt werden.

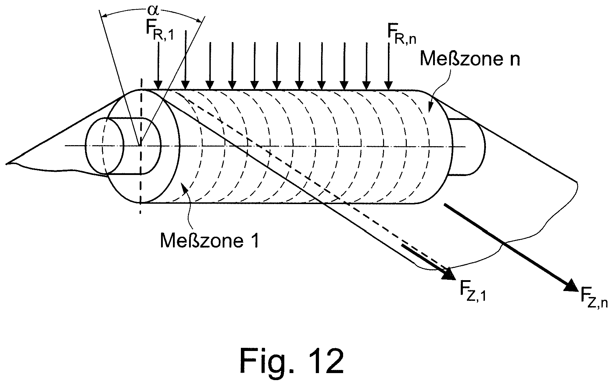

Zur Bestimmung der Lage der Bandkante 317 des bandförmigen Guts 318 (des Bands 318) wird das Band 318 so über die Messrolle 1 geführt, dass es diese mit einem Umschlingungswinkel ALPHA (vgl. Fig. 12) umgibt. Durch die Bewegung des Bands 318 wird die Messrolle 1 um die Rotationsachse A gedreht. Ergänzend kann ein Antrieb vorgesehen sein, der die Drehung der Messrolle 1 um die Rotationsachse unterstützt.

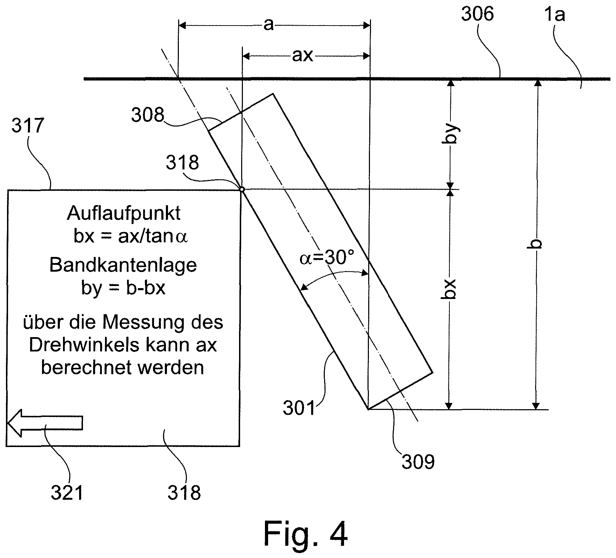

In der Fig. 2 und Fig. 4 ist das Band 318 teilweise dargestellt. Zur besseren Übersichtlichkeit wurde das Band 318 an der Linie, an der das Band 318 zum ersten Mal mit dem ersten Balken 301 in Kontakt kommt (dem Auflaufpunkt 319), abgeschnitten. In der Realität erstreckt sich das Band 318 von der Schnittkante 320 noch weiter nach rechts in der Fig. 2 und 4. Das Band 318 wird in Richtung des Pfeils 321 über die Messrolle 1 bewegt. Durch diese Bewegung dreht das Band 318 die Messrolle 1 ebenfalls in Richtung des Pfeils 321. Durch die Drehung der Messrolle 1 werden der erste Balken 301 und der zweite Balken 301 einmal pro Umdrehung der Messrolle 1 in Kontakt mit dem Band 318 gebracht. Aufgrund der schrägen Lage der Balken 301 hängt die Lage des Punktes, an dem der jeweilige Balken 301 als erstes pro Umdrehung mit dem Band 318 in Kontakt kommt (der jeweilige Auflaufpunkt 319), von der Lage der Bandkante 317 relativ zur Mittenebene 305 bzw. von der Lage der Bandkante 317 relativ zum ersten Ende 306 bzw. von der Lage der Bandkante 317 relativ zum zweiten Ende 307 ab. In der in Fig. 2 und 4 gezeigten Betriebssituation ist die obere Bandkante 317 weiter entfernt von der Mittenebene 305 als die untere Bandkante 317. Der Abstand der oberen Bandkante 317 zum ersten Ende 306 des Messrollenkörpers 1a ist kleiner als der Abstand der unteren Bandkante 317 zum zweiten Ende 307 des Messrollenkörpers 1a. Deshalb ist der Abstand des Auflaufpunkts 319 der oberen Bandkante 317 auf den ersten Balken 301 zum ersten Ende 308 des ersten Balken 301 kleiner als der Abstand des Auflaufpunkts 319 der unteren Bandkante 317 auf den zweiten Balken 301 zum ersten Ende 310 des zweiten Balkens 301. In der in Fig. 2 und 4 dargestellten Betriebssituation ist die obere Bandkante 317 gerade auf den ersten Balken 301 aufgelaufen, während die untere Bandkante 317 noch nicht auf den zweiten Balken 301 aufgelaufen ist. Die Kraftsensoren, auf denen sich der erste Balken 301 abstützt, geben bereits ein Signal. Die Kraftsensoren, auf denen sich der zweite Balken 301 abstützt, geben noch kein Signal.

Fig. 4 zeigt, dass sich der Abstand der Bandkante 317 von dem ersten Ende 306 der Messrolle 1 durch die Formel

$$by = b - (ax / \tan(BETA))$$

berechnen lässt, wobei

b = Axialer Abstand des am nächsten zur Mittenebene 305 angeordneten Punkts des zweiten Endes 309 des Balkens 301;

ax = Abstand in Umfangsrichtung zwischen dem am nächsten zur Mittenebene 305 angeordneten Punkt des zweiten Endes 309 des Balkens 301 und dem Auflaufpunkt 319 (Erstausschlag des Messsignals);

BETA = Winkel zwischen Rollenachse und Balken.

Der Abstand ax lässt sich über eine Drehgeber ermitteln. Der Drehgeber kann auch dazu verwendet werden, das Signal des Kraftsensors in Relation zum Drehwinkel aufzulösen. Somit kann festgestellt werden, bei welchem Drehwinkel der Erstausschlag des Signals des Kraftsensors auftritt. Ist beispielsweise in einer Tabelle hinterlegt, bei welchem Drehwinkel welcher Abstand ax vorliegt, so kann aus einer Überwachung des Signals des Kraftsensors in Relation zum Drehwinkel der Wert ax bestimmt werden. Wird der Erstausschlag des Signals festgestellt und ausgegeben, bei welchem Drehwinkel der Erstausschlag erfolgt, so kann über den Drehwinkel und eine Zuordnungstabelle zwischen Drehwinkel und ax der für diesen Drehwinkel zugehörige Wert ax ermittelt werden.

Fig. 1 zeigt, dass die Messrolle allein dazu ausgeführt sein kann, die Bandkantenlage und mit ihr - falls gewünscht - die Bandbreite zu bestimmen. Für eine solche Anwendung ist die Messrolle 1 lediglich mit zwei Balken 301 ausgestattet.

Fig. 2 zeigt, dass die für die Bestimmung der Bandkantenlage einzusetzenden Balken 301 mit weiteren Kraftsensoren in weiteren Ausnehmungen kombiniert werden können, die beispielsweise zur Bestimmung der Planheit eingesetzt werden können. So zeigt Fig. 2 eine erste Reihe von Ausnehmungen 203 und eine zweite Reihe von Ausnehmungen 203.

Bei der in Fig. 1, 2 dargestellten Ausführungsform ist die als Balken 301 ausgeführte Abdeckung so ausgeführt, dass sie eine Außenoberfläche aufweist, deren geometrische Form sowohl bzgl. Ebenen, die senkrecht zur Rotationsachse A stehen, nicht spiegelsymmetrisch ausgeführt ist, als auch bzgl. Ebenen, die die Rotationsachse A enthalten, nicht spiegelsymmetrisch ausgeführt ist.

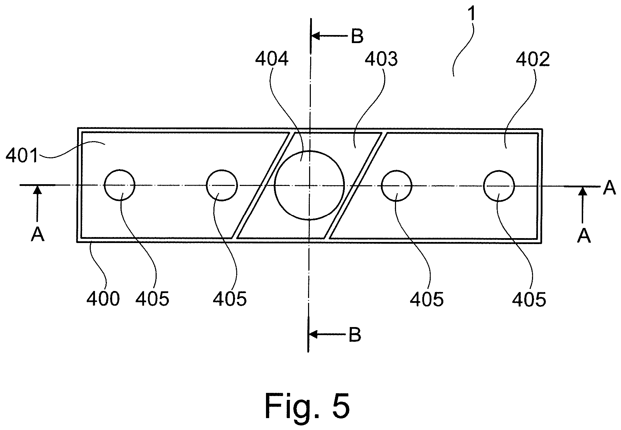

Fig. 5 zeigt eine Draufschicht auf einen Teil der Außenoberfläche einer erfindungsgemäßen Messrolle 1. Die Messrolle 1 weist einen Ausschnitt 400 auf. In dem Ausschnitt 400 sind zwei Formkörper 401 und 402 sowie eine Abdeckung 403 angeordnet. Die Abdeckung 403 weist in der Draufsicht der Fig. 5, die einer Draufsicht entlang einer Radialen des Messrollenkörpers 1a entspricht, eine trapezförmige Querschnittsform auf. Die Abdeckung wird von einer Spannschraube 404 gehalten. Die Formkörper 401, 402 werden mit Befestigungsschrauben 405 gehalten. In Fig. 5 ist die Rotationsachse A des Messrollenkörpers 1a eingezeichnet. Fig. 5 zeigt, dass die Abdeckung 403 so ausgeführt ist, dass

- die Abdeckung 403 eine Außenoberfläche aufweist, deren geometrische Form sowohl bzgl. Ebenen, die senkrecht zur Rotationsachse A stehen, nicht spiegelsymmetrisch ausgeführt ist, als auch bzgl. Ebenen, die die Rotationsachse A enthalten, nicht spiegelsymmetrisch ausgeführt ist.

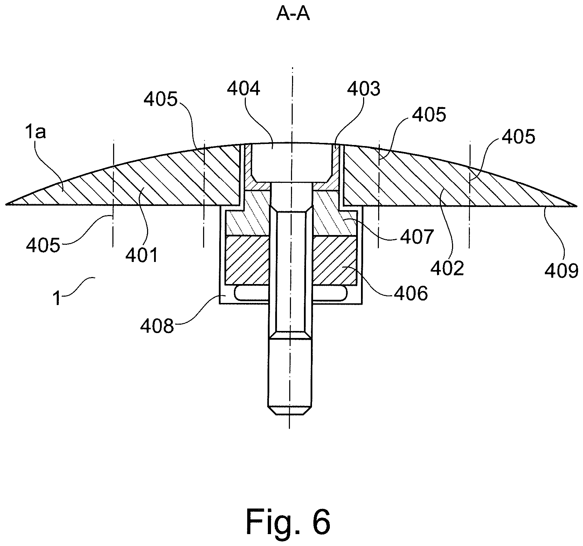

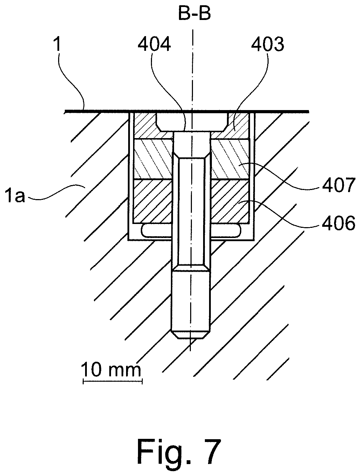

Fig. 6, 7 zeigt, dass zwischen der Abdeckung 403 und dem Kraftsensor 406 ein Zwischenstück 407 angeordnet ist. Das Zwischenstück 407 ist gestuft ausgeführt, ist aber in Querschnitten senkrecht zur Längsachse der Befestigungsschraube 404 symmetrisch, nämlich rund ausgeführt. Der Kraftsensor 406 ist kreisringförmig um die Längsachse der Befestigungsschraube 404 ausgeführt.

Fig. 6 zeigt, dass die Formkörper 401, 402 über die Ausnehmung 408 im Messrollenkörper 1a überkragen.

Der Ausschnitt 400 im Messrollenkörper 1a weist eine ebene Grundfläche 409 auf.

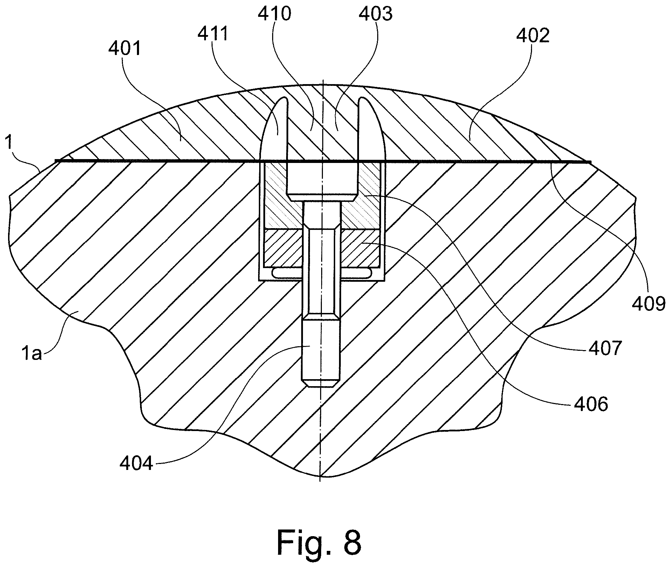

Fig. 8 zeigt, dass die Abdeckung 403 und die Formkörper 401, 402 Teil eines einstückigen Körpers sein können. In dem Körper kann ein in ihm ausgeführter Stempel 410 vorgesehen sein, der oberhalb des Zwischenstücks 407 angeordnet ist, vorzugsweise in Kontakt mit dem Zwischenstück 407 steht. Der Stempel 410 ist durch einen ringförmigen Freischnitt 411 in dem Körper ausgeführt.

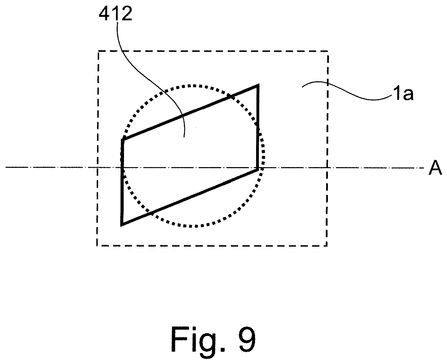

Fig. 9 zeigt eine Draufsicht auf einen Kraftsensor 412, der in einer nicht näher dargestellten, gleichgeformten Ausnehmung in dem Messrollenkörper 1a angeordnet ist. Die Rotationsachse A ist in der Fig. 9 dargestellt. Fig. 9 zeigt eine Bauform, bei der

- der Kraftsensor 412 eine Außenoberfläche aufweist, deren geometrische Form sowohl bzgl. Ebenen, die senkrecht zur Rotationsachse stehen, nicht spiegelsymmetrisch ausgeführt ist, als auch bzgl. Ebenen, die die Rotationsachse enthalten, nicht spiegelsymmetrisch ausgeführt ist.

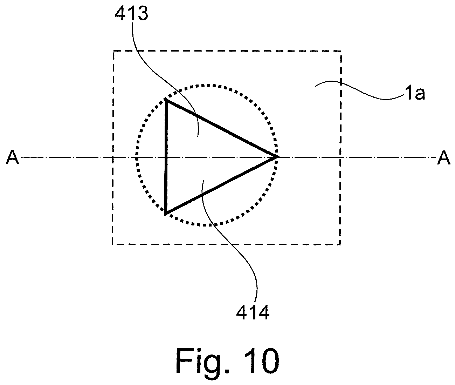

Fig. 10 zeigt eine Draufsicht auf einen (strichpunktiert dargestellten, kreisförmigen) Kraftsensor 413, der in einer nicht näher dargestellten, gleichgeformten Ausnehmung in dem Messrollenkörper 1a angeordnet ist. Oberhalb des Kraftsensors 413 und unterhalb einer (in Fig. 10 nicht dargestellten) Abdeckung ist ein Zwischenstück 414 vorgesehen. Die Rotationsachse A ist in der Fig. 10 dargestellt. Fig. 10 zeigt eine Bauform, bei der

- das zwischen der Abdeckung und dem Kraftsensor 413 angeordnete Zwischenstück 414 eine Außenoberfläche aufweist, deren geometrische Form bzgl. einer Symmetrieebene, die die Rotationsachse A enthält, spiegelsymmetrisch ausgeführt ist, deren geometrische Form aber bzgl. Ebenen, die senkrecht zur Rotationsachse A stehen, nicht spiegelsymmetrisch ausgeführt ist

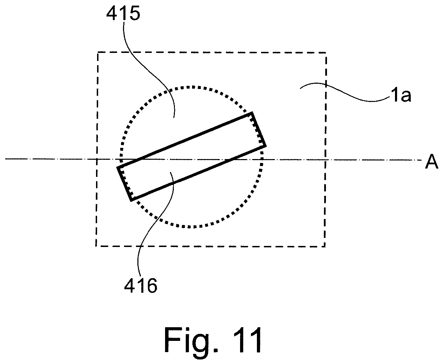

Fig. 11 zeigt eine Draufsicht auf einen (strichpunktiert dargestellten, kreisförmigen) Kraftsensor 415, der in einer nicht näher dargestellten, gleichgeformten Ausnehmung in dem Messrollenkörper 1a angeordnet ist. Oberhalb des Kraftsensors 415 und unterhalb einer (in Fig. 10 nicht dargestellten) Abdeckung ist ein Zwischenstück 416 vorgesehen. Die Rotationsachse A ist in der Fig. 11 dargestellt. Fig. 11 zeigt eine Bauform, bei der

- das zwischen der Abdeckung und dem Kraftsensor 415 angeordnete Zwischenstück 416 eine Außenoberfläche aufweist, deren geometrische Form sowohl bzgl. Ebenen, die senkrecht zur Rotationsachse A stehen, nicht spiegelsymmetrisch ausgeführt ist, als auch bzgl. Ebenen, die die Rotationsachse A enthalten, nicht spiegelsymmetrisch ausgeführt ist.

Fig. 12 zeigt die durch ein die Messrolle 1 teilweise umschlingendes, unter Bandzug stehendes Metallband auf die Messrolle 1 aufgebrachten Kräfte. Die an den in Ausnehmungen in der Messrolle 1 angeordneten Quarz-Kraftsensoren erzeugen elektrische Ladung. Diese ist direkt proportional der auf den Quarz aufgebrachten Kraft.

Die üblicherweise in I-Units gemessene Bandlängenabweichung, die üblicherweise als ein Repräsentant für die Planheit des Bandes verwendet wird, lässt sich aufgrund der folgenden Beziehungen berechnen:

**Örtliche Radialkraft in N**
$F_{R,i}$

**Örtliche Zugkraft in N**

$$F_{Z,i} = F_{R,i} / (2 \times \sin \alpha/2)$$

$\alpha$ = Bandumlenkwinkel um Messrolle

**Örtliche Zugspannung in N/mm2**

$$\sigma_{Z,i} = F_{Z,i} / (b_{EI} \times d)$$

$b_{EI}$ = Messzonenbreit

d = Banddicke

**Zugspannungsabweichung in N/mm2**

$$\Delta\sigma_{Z,i} = \sigma_{Z,max} - \sigma_{Z,i}$$

$$\sigma_{Z,max} = \text{maximale örtliche Zugspannung}$$

**Bandlängenabweichung in $\mu$m/m**

$$\Delta L/L_i = (\Delta\sigma_{Z,i} / E) \times 10^6$$

$$E = \text{E-Modul} \ (E_{Stahl} = 2{,}06 \times 10^5 \ \text{N/mm2})$$

**Bandlängenabweichung in I-Unit**

$$\Delta L / L_i = (\Delta \sigma_{Z,i} / E) \times 10^5$$

$$E = \text{E-Modul} \ (E_{Stahl} = 2{,}06 \times 10^5 \ \text{N/mm2})$$

Beispiel:

Quarz-Kraftsensor: Empfindlichkeit = 4,2 pC/N
Ladung am Sensor: = 210 pC
Kraft auf Sensor: $F_{R,i}$ = 50 N

$F_{Z,i}$ =50/ (2 x 0,342/2) = 146,19 N $\alpha$ = 20° $\quad \sigma_{Z,i} = 146{,}19/(25 \times 0.5) = 11{,}69 \text{N/mm2} \quad b_{EI}$ =25mm, d=0.5mm

$\Delta \sigma_{Z,i}$ = 20 − 11,69 = 8,3 N/mm2 $\sigma_{Z,max}$ = 20 N/mm2

$$\Delta L / L_i = (\Delta \sigma_{Z,i} / E) \times 10^6 = 162{,}34 \ \mu m/m \quad E = \text{E-Modul}$$

$$(E_{Stahl} = 2{,}06 \times 10^5 \ \text{N / mm2})$$

$$\Delta L / L_i = (\Delta \sigma_{Z,i} / E) \times 10^5 = 16{,}234 \ \text{I-Unit}$$

**Patentansprüche**

1. Verwendung einer Messrolle (1), die zum Feststellen einer Eigenschaft eines über die Messrolle geführten bandförmigen Guts (318), insbesondere von Metallband geeignet ist und die

   • einen Messrollenkörper (1a) mit einer Umfangsfläche (1b),
   • mindestens eine Ausnehmung (203, 300, 408) in dem Messrollenköper (1a),
   • mindestens einen in der Ausnehmung (203, 300, 408) angeordneten Balken (301) , der sich entlang einer Längsachse (302) erstreckt, und
   • einen in der Ausnehmung (203, 300, 408) angeordneten Kraftsensor (303, 304, 406, 412, 413, 415)

   aufweist, wobei der Balken (301) innerhalb der Ausnehmung (203, 300, 408) auf dem Kraftsensor (303, 304, 406, 412, 413, 415) abgestützt ist und wobei sich der Messrollenkörper (1a) entlang einer Rotationsachse (A) erstreckt und die Längsachse (302) des Balkens (301) nicht parallel zur Rotationsachse (A) des Messrollenkörpers (1a) verläuft und die Längsachse (302) des Balkens (301) nicht in einer Ebene verläuft, die senkrecht zur Rotationsachse (A) des Messrollenkörpers (1a) steht, zur Bestimmung der Lage einer Bandkante (317) des bandförmigen Guts (318) relativ zu einem Bezugspunkt oder einer Bezugslinie oder einer Bezugsebene, wenn das bandförmige Gut (318) über die Messrolle (1) geführt wird.

2. Verfahren zur Bestimmung der Lage einer Bandkante eines bandförmigen Guts relativ zu einem Bezugspunkt oder einer Bezugslinie oder einer Bezugsebene, wenn das bandförmige Gut über die Messrolle geführt wird, bei dem

   • das bandförmige Gut über eine Messrolle geführt wird, wobei die Messrolle

• einen Messrollenkörper (1a) mit einer Umfangsfläche (1b),
• mindestens eine Ausnehmung (203, 300, 408) in dem Messrollenköper (1a),
• mindestens einen in der Ausnehmung (203, 300, 408) angeordneten Balken (301), der sich entlang einer Längsachse (302) erstreckt, und
• einen in der Ausnehmung (203, 300, 408) angeordneten Kraftsensor (303, 304, 406, 412, 413, 415)

aufweist, wobei der Balken (301) innerhalb der Ausnehmung (203, 300, 408) auf dem Kraftsensor (303, 304, 406, 412, 413, 415) abgestützt ist und wobei sich der Messrollenkörper (1a) entlang einer Rotationsachse (A) erstreckt und die Längsachse (302) des Balkens (301) nicht parallel zur Rotationsachse (A) des Messrollenkörpers (1a) verläuft und die Längsachse (302) des Balkens (301) nicht in einer Ebene verläuft, die senkrecht zur Rotationsachse (A) des Messrollenkörpers (1a) steht,
• wobei das bandförmige Gut (318) so über die Messrolle (1) geführt wird, dass eine Bandkante (317) des bandförmigen Guts (318) während einer Umdrehung der Messrolle (1) einmal in eine Position gelangt, die in Radialrichtung des Messrollenkörpers (1a) gesehen oberhalb des Balkens (301) ist,
• aus dem Messsignal des Kraftsensors (303, 304, 406, 412, 413, 415) die Lage der Bandkante (317) des bandförmigen Guts (318) relativ zu einem Bezugspunkt oder einer Bezugslinie oder einer Bezugsebene bestimmt wird.

3. Verwendung nach Anspruch 1 oder Verfahren nach Anspruch 2, **dadurch gekennzeichnet, dass** die Messrolle (1) einen ersten in der Ausnehmung (300) angeordneten Kraftsensor (303) und einen zweiten in der Ausnehmung (300) angeordneten Kraftsensor (304) aufweist, wobei der Balken (301) innerhalb der Ausnehmung (300) auf dem ersten Kraftsensor (303) und auf dem zweiten Kraftsensor (304) aufgestützt ist.

4. Verwendung nach Anspruch 1 oder 3, Verfahren nach Anspruch 2 oder 3, **dadurch gekennzeichnet, dass** über der Ausnehmung (203, 300, 408) ein Schichtauftrag ausgebildet ist.

5. Verwendung nach Anspruch 1, 3 oder 4, Verfahren nach Anspruch 2, 3 oder 4, **dadurch gekennzeichnet, dass** der Messrollenkörper (1a) eine Ummantelung aufweist.

6. Messrolle, die zum Feststellen einer Eigenschaft eines über die Messrolle (1) geführten bandförmigen Guts (318), insbesondere von Metallband geeignet ist und die

• einen Messrollenkörper (1a) mit einer Umfangsfläche (1b),
• mindestens eine erste Ausnehmung (300) in dem Messrollenköper (1a), wobei die erste Ausnehmung (300) eine erste Querschnittsform hat,
• mindestens einen in der ersten Ausnehmung (203, 300, 408) angeordneten Balken (301), der sich entlang einer Längsachse (302) erstreckt, und
• einen in der Ausnehmung (203, 300, 408) angeordneten Kraftsensor (303, 304, 406, 412, 413, 415)

aufweist, wobei der Balken (301) innerhalb der ersten Ausnehmung (203, 300, 408) auf dem Kraftsensor (303, 304, 406, 412, 413, 415) abgestützt ist und wobei sich der Messrollenkörper (1a) entlang einer Rotationsachse (A) erstreckt und die Längsachse (302) des Balkens (301) nicht parallel zur Rotationsachse (A) des Messrollenkörpers (1a) verläuft und die Längsachse (302) des Balkens (301) nicht in einer Ebene verläuft, die senkrecht zur Rotationsachse (A) des Messrollenkörpers (1a) steht, **gekennzeichnet durch** mindestens eine weitere Ausnehmung (203) in dem Messrollenkörper (1a), wobei in der weiteren Ausnehmung (203) ein zweiter Kraftsensor (304) angeordnet ist und die weitere Ausnehmung (203) eine zweite Querschnittsform hat, die von der ersten Querschnittsform unterschiedlich ist, wobei die zweite Querschnittsform der weiteren Ausnehmung kreisförmig ist.

## Claims

1. Use of a measuring roller (1) which is adapted for determining a property of a strip-shaped material (318), in particular a metal strip, guided over the measuring roller, and which comprises

- a measuring roller body (1a) with a circumferential surface (1b),
- at least one recess (203, 300, 408) in the measuring roller body (1a),
- at least one beam (301) arranged in the recess (203, 300, 408) and extending along a longitudinal axis (302), and
- a force sensor (303, 304, 406, 412, 413, 415) arranged in the recess (203, 300, 408)

wherein the beam (301) is supported within the recess (203, 300, 408) on the force sensor (303, 304, 406, 412, 413, 415) and wherein the measuring roller body (1a) extends along an axis of rotation (A) and the longitudinal axis (302) of the beam (301) does not extend parallel to the axis of rotation (A) of the measuring roller body (1a) and the longitudinal axis (302) of the beam (301) does not extend in a plane, which is perpendicular to the axis of rotation (A) of the measuring roller body (1a), for determining the position of a strip edge (317) of the strip-shaped material (318) relative to a reference point or a reference line or a reference plane when the strip-shaped material (318) is guided over the measuring roller (1).

2.  Method for determining the position of a strip edge of a strip-shaped material relative to a reference point or a reference line or a reference plane when the strip-shaped material is guided over the measuring roller, in which

    - the strip-shaped material is guided over a measuring roller, whereby the measuring roller comprises

        • a measuring roller body (1a) with a circumferential surface (1b),
        • at least one recess (203, 300, 408) in the measuring roller body (1a),
        • at least one beam (301) arranged in the recess (203, 300, 408) and extending along a longitudinal axis (302), and
        • a force sensor (303, 304, 406, 412, 413, 415) arranged in the recess (203, 300, 408)

    wherein the beam (301) is supported within the recess (203, 300, 408) on the force sensor (303, 304, 406, 412, 413, 415) and wherein the measuring roller body (1a) extends along an axis of rotation (A) and the longitudinal axis (302) of the beam (301) does not extend parallel to the axis of rotation (A) of the measuring roller body (1a) and the longitudinal axis (302) of the beam (301) does not extend in a plane which is perpendicular to the axis of rotation (A) of the measuring roller body (1a),
    - wherein the strip-shaped material (318) is guided over the measuring roller (1) in such a way that a strip edge (317) of the strip-shaped material (318) reaches a position once during one revolution of the measuring roller (1) which is above the beam (301) as viewed in the radial direction of the measuring roller body (1a),
    - the position of the strip edge (317) of the strip-shaped material (318) relative to a reference point or a reference line or a reference plane is determined from the measurement signal of the force sensor (303, 304, 406, 412, 413, 415).

3.  Use according to claim 1 or method according to claim 2, **characterized in that** the measuring roller (1) has a first force sensor (303) arranged in the recess (300) and a second force sensor (304) arranged in the recess (300), the beam (301) being supported within the recess (300) on the first force sensor (303) and on the second force sensor (304).

4.  Use according to claim 1 or 3, method according to claim 2 or 3, **characterized in that** a coating layer is formed over the recess (203, 300, 408).

5.  Use according to claim 1, 3 or 4, method according to claim 2, 3 or 4, **characterized in that** the measuring roller body (1a) has a casing.

6.  Measuring roller, which is adapted for determining a property of a strip-shaped material (318), in particular a metal strip, guided over the measuring roller (1) and which comprises

        • a measuring roller body (1a) with a circumferential surface (1b),
        • at least one first recess (300) in the measuring roller body (1a), wherein the first recess (300) has a first cross-sectional shape,
        • at least one beam (301) arranged in the first recess (203, 300, 408) and extending along a longitudinal axis (302), and
        • a force sensor (303, 304, 406, 412, 413, 415) arranged in the recess (203, 300, 408)

    wherein the beam (301) is supported within the first recess (203, 300, 408) on the force sensor (303, 304, 406, 412, 413, 415) and wherein the measuring roller body (1a) extends along an axis of rotation (A) and the longitudinal axis (302) of the beam (301) does not extend parallel to the axis of rotation (A) of the measuring roller body (1a) and the longitudinal axis (302) of the beam (301) does not extend in a plane, which is perpendicular to the axis of rotation (A) of the measuring roller body (1a), **characterized by** at least one further recess (203) in the measuring roller body (1a), a second force sensor (304) being arranged in the further recess (203) and the further recess (203) having a second cross-sectional shape which is different from the first cross-sectional shape, the second cross-sectional shape of the further recess being circular.

**Revendications**

1. Utilisation d'un rouleau de mesure (1) qui est adapté pour déterminer une propriété d'un produit en forme de bande (318) guidé sur le rouleau de mesure, en particulier d'une bande métallique, et qui présente

   • un corps de rouleau de mesure (1a) doté d'une surface périphérique (1b),
   • au moins un évidement (203, 300, 408) dans le corps de rouleau de mesure (1a),
   • au moins une barre (301) qui est disposée dans l'évidement (203, 300, 408) et s'étend le long d'un axe longitudinal (302), et
   • un capteur de force (303, 304, 406, 412, 413, 415) disposé dans l'évidement (203, 300, 408)

   sachant que la barre (301) est en appui sur le capteur de force (303, 304, 406, 412, 413, 415) dans l'évidement (203, 300, 408), et sachant que le corps de rouleau de mesure (1a) s'étend le long d'un axe de rotation (A) et l'axe longitudinal (302) de la barre (301) n'est pas parallèle à l'axe de rotation (A) du corps de rouleau de mesure (1a) et l'axe longitudinal (302) de la barre (301) ne s'étend pas dans un plan qui est perpendiculaire à l'axe de rotation (A) du corps de rouleau de mesure (1a), aux fins de déterminer la position d'un bord de bande (317) du produit en forme de bande (318) par rapport à un point de référence ou une ligne de référence ou un plan de référence, lorsque le produit en forme de bande (318) est guidé sur le rouleau de mesure (1).

2. Procédé de détermination de la position d'un bord de bande d'un produit en forme de bande par rapport à un point de référence ou une ligne de référence ou un plan de référence, lorsque le produit en forme de bande est guidé sur le rouleau de mesure, selon lequel

   • le produit en forme de bande est guidé sur un rouleau de mesure, sachant que le rouleau de mesure présente

     • un corps de rouleau de mesure (1a) doté d'une surface périphérique (1b),
     • au moins un évidement (203, 300, 408) dans le corps de rouleau de mesure (1a),
     • au moins une barre (301) qui est disposée dans l'évidement (203, 300, 408) et s'étend le long d'un axe longitudinal (302), et
     • un capteur de force (303, 304, 406, 412, 413, 415) disposé dans l'évidement (203, 300, 408)

   sachant que la barre (301) est en appui sur le capteur de force (303, 304, 406, 412, 413, 415) dans l'évidement (203, 300, 408), et sachant que le corps de rouleau de mesure (1a) s'étend le long d'un axe de rotation (A) et l'axe longitudinal (302) de la barre (301) n'est pas parallèle à l'axe de rotation (A) du corps de rouleau de mesure (1a) et l'axe longitudinal (302) de la barre (301) ne s'étend pas dans un plan qui est perpendiculaire à l'axe de rotation (A) du corps de rouleau de mesure (1a),
   • le produit en forme de bande (318) étant guidé sur le rouleau de mesure (1) de manière à ce que, au cours d'une révolution du rouleau de mesure (1), un bord de bande (317) du produit en forme de bande (318) arrive une fois dans une position qui se situe au-dessus de la barre (301), vu dans la direction radiale du corps de rouleau de mesure (1a),
   • la position du bord de bande (317) du produit en forme de bande (318), par rapport à un point de référence ou une ligne de référence ou un plan de référence, étant déterminée à partir du signal de mesure du capteur de force (303, 304, 406, 412, 413, 415).

3. Utilisation selon la revendication 1 ou procédé selon la revendication 2, caractérisé(e) en ce que le rouleau de mesure (1) présente un premier capteur de force (303), disposé dans l'évidement (300), et un deuxième capteur de force (304) disposé dans l'évidement (300), la barre (301) étant en appui sur le premier capteur de force (303) et sur le deuxième capteur de force (304), dans l'évidement (300).

4. Utilisation selon la revendication 1 ou 3, procédé selon la revendication 2 ou 3, caractérisé(e) en ce qu'un revêtement en couches est réalisé au-dessus de l'évidement (203, 300, 408).

5. Utilisation selon la revendication 1, 3 ou 4, procédé selon la revendication 2, 3 ou 4, caractérisé(e) en ce que le corps de rouleau de mesure (1a) présente une enveloppe.

6. Rouleau de mesure (1) qui est adapté pour déterminer une propriété d'un produit en forme de bande (318) guidé sur le rouleau de mesure (1), en particulier d'une bande métallique, et qui présente

- un corps de rouleau de mesure (1a) doté d'une surface périphérique (1b),
- au moins un premier évidement (300) dans le corps de rouleau de mesure (1a), le premier évidement (300) ayant une première forme en section transversale,
- au moins une barre (301) qui est disposée dans le premier évidement (203, 300, 408) et s'étend le long d'un axe longitudinal (302), et
- un capteur de force (303, 304, 406, 412, 413, 415) disposé dans l'évidement (203, 300, 408),

sachant que la barre (301) est en appui sur le capteur de force (303, 304, 406, 412, 413, 415) dans le premier évidement (203, 300, 408), et sachant que le corps de rouleau de mesure (1a) s'étend le long d'un axe de rotation (A) et l'axe longitudinal (302) de la barre (301) n'est pas parallèle à l'axe de rotation (A) du corps de rouleau de mesure (1a) et l'axe longitudinal (302) de la barre (301) ne s'étend pas dans un plan qui est perpendiculaire à l'axe de rotation (A) du corps de rouleau de mesure (1a), **caractérisé en ce qu'**il est prévu au moins un évidement supplémentaire (203) dans le corps de rouleau de mesure (1a), sachant qu'un deuxième capteur de force (304) est disposé dans l'évidement supplémentaire (203) et que l'évidement supplémentaire (203) a une deuxième forme en section transversale qui est différente de la première forme en section transversale, la deuxième forme en section transversale de l'évidement supplémentaire étant circulaire.

Fig. 1

Fig. 2

Fig. 3

Auflaufpunkt
$bx = ax/\tan\alpha$

Bandkantenlage
$by = b-bx$

über die Messung des
Drehwinkels kann ax
berechnet werden

Fig. 4

Fig. 5

A-A

Fig. 6

B-B

1    404    403

1a

407

406

10 mm

## Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4236657 A1
- DE 19616980 A1
- DE 10207501 C1
- DE 202007001066 U1
- WO 2020120328 A
- EP 3009206 A1
- DE 102008030282 B3
- DE 202014006820 U1
- DE 2630410 C2
- DE 10207501
- DE 102014012426 A1
- DE 1773551 A1